(19) Europäisches Patentamt / European Patent Office / Office européen des brevets

(11) **EP 2 964 503 B1**

(12) **EUROPÄISCHE PATENTSCHRIFT**

(45) Veröffentlichungstag und Bekanntmachung des Hinweises auf die Patenterteilung:
**19.07.2017   Patentblatt 2017/29**

(21) Anmeldenummer: **14707414.0**

(22) Anmeldetag: **03.03.2014**

(51) Int Cl.:
**B60W 30/095** (2012.01)    **G08G 1/16** (2006.01)

(86) Internationale Anmeldenummer:
**PCT/EP2014/054051**

(87) Internationale Veröffentlichungsnummer:
**WO 2014/135487 (12.09.2014 Gazette 2014/37)**

(54) **SCHÄTZUNG DER ZUKÜNFTIGEN GESCHWINDIGKEIT UND/ODER ENTFERNUNG EINES FAHRZEUGS VON EINEM REFERENZPUNKT UND SCHÄTZUNG DER ZUKÜNFTIGEN BESCHLEUNIGUNG**

ESTIMATION OF THE FUTURE SPEED AND/OR DISTANCE OF A VEHICLE FROM A REFERENCE POINT AND ESTIMATION OF THE FUTURE ACCELERATION

ESTIMATION DE LA VITESSE FUTURE ET/OU DISTANCE D'UN VÉHICULE D'UN POINT DE RÉFÉRENCE ET ESTIMATION DE L'ACCÉLÉRATION FUTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2013   DE 102013203908**

(43) Veröffentlichungstag der Anmeldung:
**13.01.2016   Patentblatt 2016/02**

(73) Patentinhaber: **Bayerische Motoren Werke Aktiengesellschaft**
**80809 München (DE)**

(72) Erfinder:
• **LIEBNER, Martin**
**80992 München (DE)**
• **RUHHAMMER, Christian**
**80336 München (DE)**
• **KLANNER, Felix**
**639798 Singapore (SG)**
• **KLÖDEN, Horst**
**80797 München (DE)**

(56) Entgegenhaltungen:
**EP-A2- 1 426 230**

• **MARTIN LIEBNER ET AL: "Driver intent inference at urban intersections using the intelligent driver model", INTELLIGENT VEHICLES SYMPOSIUM (IV), 2012 IEEE, IEEE, 3. Juni 2012 (2012-06-03), Seiten 1162-1167, XP032452922, DOI: 10.1109/IVS.2012.6232131 ISBN: 978-1-4673-2119-8 in der Anmeldung erwähnt**

**Beschreibung**

Die Erfindung betrifft ein Verfahren zum Schätzen einer zukünftigen Geschwindigkeit und/oder Entfernung eines Fahrzeugs von einem Referenzpunkt und ein Verfahren zum Schätzen einer zukünftigen Beschleunigung eines Fahrzeugs.

Heutzutage bestehen Bestrebungen Fahrerassistenzsysteme für Fahrzeuge zu entwickeln, die Fahrer von Fahrzeugen dann warnen, wenn eine Kollision mit einem anderen Verkehrsteilnehmer droht. Allgemein droht eine Kollision mit anderen Verkehrsteilnehmern insbesondere dann, wenn der Fahrer eines Kraftfahrzeugs anderen Verkehrsteilnehmern die Vorfahrt nimmt.

Typische Situationen dieser Art treten beim Abbiegen an einer Kreuzung auf. Dort werden häufig Fahrradfahrer oder Fußgänger übersehen, die die Straße, in die das Fahrzeug einbiegt, auf einem Fußgängerüberweg oder Fahrradüberweg überqueren und denen eigentlich die Vorfahrt gewährt werden müsste. Die Gefahr, dass einem Verkehrsteilnehmer die Vorfahrt genommen wird, besteht beim Abbiegen an einer Kreuzung insbesondere dann, wenn das Fahrzeug an einer Kreuzung abbiegt und/oder wenn das Fahrzeug beim Abbiegen an einem Fußgänger- oder Fahrradüberweg nicht hält. Die Ausgabe einer Warnung an den Fahrer des Fahrzeugs erscheint deshalb angebracht, wenn das Fahrzeug abbiegt und insbesondere, wenn abzusehen ist, dass das Fahrzeug beim Abbiegen an einem Fußgänger- oder Fahrradüberweg nicht anhält.

Weiterhin kann auch in Situationen, in denen ein Fahrzeug eine Straße kreuzt, anderen Verkehrsteilnehmern die Vorfahrt genommen werden.

Um nur in tatsächlichen Gefahrensituationen eine Warnung auszugeben ist es also vonnöten, das Fahrmanöver, das ein Fahrzeug ausführen wird, vorherzusagen. Ein Fahrmanöver kann beispielsweise die Durchfahrt einer Kreuzung, ein Halten an einer Haltelinie, ein Abbiegen und ein Abbiegen mit Halten an einem Überweg sein. Je nach Fahrmanöver können andere Verkehrsteilnehmer relevant werden und für Warnungen zu berücksichtigen sein.

In der Veröffentlichung "Driver Intent Inference at Urban Intersections using the Intelligent Driver Model", IEEE Intelligent Vehicle Symposium, Jun. 2012, pp. 1162 - 1167 wird ein Verfahren zur Vorhersage von Fahrmanövern vorgestellt. Gemäß diesem werden die Trajektorien und Geschwindigkeitsverläufe von Testfahrten an einer bestimmten Kreuzung für die einzelnen Fahrmanöver aufgezeichnet. Auf der Grundlage einer statistischen Auswertung dieser Geschwindigkeitsverläufe werden Wunschgeschwindigkeiten und deren Verläufe für einzelne Fahrmanöver errechnet. Auf der Basis dieser Wunschgeschwindigkeiten können dann bei nachfolgenden Fahrten an der betrachteten Kreuzung mithilfe von dann gemessenen Geschwindigkeiten des Fahrzeugs Vorhersagen zu Fahrmanövern gemacht werden.

Das in der genannten Veröffentlichung vorgeschlagene Verfahren basiert auf den Aufzeichnungen von durchgeführten Testfahrten und schränkt die Anwendung des Verfahrens insoweit auf solche Streckenabschnitte ein, für die aufgezeichnete Trajektorien mit Geschwindigkeitsverläufen vorliegen. In diesem Kontext schlägt die nachveröffentlichte anhängige Patentanmeldung WO 2014/111408 A1 ein Verfahren vor, wie Verläufe der Wunschgeschwindigkeiten bestimmt werden können ohne Aufzeichnungen von Testfahrten zu benötigen.

Sowohl in der genannten Veröffentlichung als auch in der genannten Patentanmeldung werden Schätzungen zu zukünftigen Geschwindigkeiten eines Fahrzeugs verwendet, um Vorhersagen zu den Fahrmanövern zu machen. Bei diesen Schätzungen wird das sogenannte Intelligent Driver Model verwendet, das auch ein vor dem eigenen Fahrzeug befindliches Vorderfahrzeug berücksichtigt. In dem Modell hat ein Vorderfahrzeug, wie im tatsächlichen Straßenverkehr, einen Einfluss auf die zukünftige Geschwindigkeit des eigenen Fahrzeugs. Dieser Einfluss hängt im Intelligent Driver Modell von der eigenen Geschwindigkeit, der Entfernung zum Vorderfahrzeug und der Geschwindigkeitsdifferenz zum Vorderfahrzeug ab.

Gegebenenfalls könnten auch andere Fahrermodelle, die die genannten Größen berücksichtigen, verwendet werden, um Schätzungen zu zukünftigen Geschwindigkeiten bereitzustellen. Ein Beispiel ist das Fahrzeugfolgemodell, das in P.G. Gipps, "A behavioural car-following model for computer simulation." in Transp. Res. B, vol. 15, April 1981, pp. 105-111 vorgestellt ist.

Vorderfahrzeuge werden vom eigenen Fahrzeug mithilfe von Sensoren (wie Kameras, Lidar oder Radar) und der Umfelderkennung erfasst. Dabei wird die Position des Vorderfahrzeugs relativ zum eigenen Fahrzeug oder zu einem absoluten Koordinatensystem festgestellt. Bei dieser Ermittlung kann es jedoch zu Fehlern kommen. Es können Vorderfahrzeuge erkannt werden, die in der Realität nicht vorhanden sind (sog. Geisterfahrzeuge) und vorhandene Vorderfahrzeuge können nicht erkannt werden. Fehler dieser Art treten insbesondere auch kurzfristig auf, d.h. das Vorderfahrzeug wird nur für eine kurze Zeit nicht erkannt oder fälschlicherweise erkannt.

Diese kurzfristigen Fehler in der Erkennung von Vorderfahrzeugen führt zu Fehlern in der Schätzung der Geschwindigkeit mithilfe des Intelligent Driver Model.

Die Aufgabe, die der Erfindung zugrunde liegt, ist es die Schätzung der zukünftigen Geschwindigkeit eines Fahrzeugs robuster zu gestalten unter Berücksichtigung von Vorderfahrzeugen im Umfeld des Fahrzeugs.

Die Aufgabe wird durch die Gegenstände gemäß den unabhängigen Ansprüchen gelöst. Vorteilhafte Weiterbildungen sind in den abhängigen Ansprüchen definiert.

Gemäß eines Aspekts der Erfindung umfasst ein Verfahren zum Schätzen einer zukünftigen Geschwindigkeit und/oder Entfernung eines Fahrzeugs von einem Referenzpunkt Folgendes: Erfassen der Geschwindigkeit des Fahrzeugs in einer ersten Entfernung des Fahrzeugs entlang eines Pfades von einem Referenzpunkt; Wobei sich das Fahrzeug zu einem ersten Zeitpunkt in der ersten Entfernung vom Referenzpunkt befindet; Erfassen der Entfernung und des Verlaufs der Entfernung des Fahrzeugs zu einem vor dem Fahrzeug fahrenden Vorderfahrzeug zwischen dem ersten und einem zweiten Zeitpunkt; Wobei sich das Vorderfahrzeug beim Erfassen auf einem Pfad befindet, auf dem sich das Fahrzeug unter der Annahme eines ersten Fahrmanövers vom ersten bis zum zweiten Zeitpunkt auch befinden wird; Erstellen von mindestens einer ersten Schätzung der Geschwindigkeit des Fahrzeugs für den zweiten Zeitpunkt und/oder der Entfernung des Fahrzeugs von dem Referenzpunkt für den zweiten Zeitpunkt; Wobei die erste Schätzung jeweils auf der Geschwindigkeit des Fahrzeugs in der ersten Entfernung, der ersten Entfernung vom Referenzpunkt und dem zweiten Zeitpunkt basiert; Wobei die erste Schätzung der Geschwindigkeit und/oder der Entfernung ferner auf einem ersten im Voraus bestimmten Verlauf der Wunschgeschwindigkeit des Fahrzeugs für die Annahme des ersten Fahrmanövers in Abhängigkeit der Entfernung des Fahrzeugs vom Referenzpunkt basiert; Gekennzeichnet durch: Erfassen der Querablage und des Verlaufs der Querablage des Vorderfahrzeugs zwischen dem ersten und zweiten Zeitpunkt; Wobei die Querablage der senkrechte Abstand der Fahrzeugmittelachse, insbesondere der Mitte oder des hinteren Endes der Fahrzeugmittelachse, zu dem Pfad ist; wobei die erste Schätzung auch den Verlauf der Entfernung zum Vorderfahrzeug und eine Filterung, insbesondere Tiefpassfilterung oder Glättung, des Verlaufs der erfassten Entfernung in Abhängigkeit von dem Verlauf der Querablage berücksichtigt.

Die Querablage des Vorderfahrzeugs entspricht dem senkrechten Abstand der Fahrzeugmittelachse zu dem Pfad, also eines vorbestimmten Fahrweges für ein Fahrmanöver. Der Pfad kann insbesondere die Mitte einer Fahrspur sein, auf dem sich ein Fahrzeug befindet, wenn der Pfad eine Fahrt entlang der Fahrspur vorsieht. In einem typischen Beispiel der Geradeausfahrt durch eine Kreuzung stimmt der Pfad mit der Mitte einer Fahrspur überein, die geradeaus durch die Kreuzung führt.

In einer bestimmten Implementierung ist das Vorderfahrzeug dann auf einem Pfad, wenn die Querablage des Fahrzeugs zu einem Pfad einen vorbestimmten Schwellwert nicht überschreitet und das Fahrzeug von anderen Fahrzeugen auf diesem Pfad das zum eigenen Fahrzeug nächste ist (den kleinesten Abstand beziehungsweise Entfernung hat). Wird kein Vorderfahrzeug erfasst, kann dies in Form eines Abstands von z.B. 0, -1 oder 1000 Metern repräsentiert werden.

Das vorgestellte Verfahren ermöglicht die robuste Schätzung der zukünftigen Geschwindigkeit mithilfe des Intelligent Driver Models durch eine Filterung des erfassten Abstandes zum Vorderfahrzeug. Tritt ein Geisterfahrzeug kurzzeitig auf, oder setzt die Erkennung des Vorderfahrzeug kurzzeitig aus, so kann durch eine Filterung der erfassten Entfernung dieses kurzzeitigen Auftretens bzw. Nicht-Erkennens vermieden werden, dass die Schätzung der Geschwindigkeit davon beeinflusst wird. Besonders geeignet hierzu sind Tiefpassfilter, Glättungen oder auch gleitende Mittelwertbildungen.

Durch die Filterung kann jedoch auch das Verlassen des Pfades durch das Vorderfahrzeug erst zeitverzögert in dem Schätzergebnis in entsprechendem Maße berücksichtigt werden. Die gefilterte Entfernung wird nämlich bei einem solchen Verlasen erst allmählich auf den Wert überführt, der eine freie Fahrspur symbolisiert, an der Stelle, an der vorher das Vorderfahrzeug war. Das Erkennen einer freien Fahrspur ist in typischen Fällen allerdings sehr relevant zur Schätzung der Geschwindigkeit und sollte deshalb so schnell wie möglich berücksichtigt werden.

Zu diesem Zweck wird hierin vorgeschlagen die Querablage des Vorderfahrzeugs zu erfassen und abhängig von dieser bei der Schätzung der Geschwindigkeit eine gefilterte Entfernung oder die erfasste Entfernung zu berücksichtigen. Verlässt also das Vorderfahrzeug den Pfad, insbesondere eben die Fahrspur, auf der sich das Fahrzeug befindet und/oder die Fahrspur, die für ein Fahrmanöver vorgesehen ist, so wird dies erkannt, weil sich die Querablage des Vorderfahrzeugs stark verändern wird und dementsprechend einen vorgegebenen Schwellwert überschreiten wird. Dies wird als Fahrspurwechsel (bzw. Pfadverlassen) des Vorderfahrzeugs erkannt und auf eine Filterung der Entfernung zum Vorderfahrzeug verzichtet. Folglich wird die neu erfasste (größere) Entfernung ungefiltert bei der Schätzung berücksichtigt.

Die Schätzung der Geschwindigkeit und/oder Entfernung wird vorteilhafterweise ausgeführt, nachdem der Verlauf der Querablage und der Verlauf der Entfernung zum Vorderfahrzeug erfasst beziehungsweise bekannt sind, was regelmäßig erst nach dem zweiten Zeitpunkt der Fall sein wird. Gegebenenfalls können Prognosen der Entfernung und/oder der Querablage erstellt werden, die eine frühere Schätzung der Geschwindigkeit und Entfernung ermöglichen. Auch ist es möglich, die Querablage für eine Prognose der Entfernung zum Vorderfahrzeug (insbesondere für kleine Zeiträume) unberücksichtigt zu lassen, um die Schätzung abzuschließen.

Filterung wird hierin derart verstanden, dass der Filter zu dem Zweck eingerichtet, vorgesehen und/oder parametriert ist, dass die Erkennung von Geisterfahrzeugen oder kurzzeitiges Nichterkennen von Vorderfahrzeugen nicht zu signifikanten Änderungen der ersten Schätzung führt. Mit anderen Worten: Der Filter muss derart ausgelegt sein, dass kurzzeitige (beispielsweise weniger als 0,1 s; 0,5 s; 1 s; 2 s) Fehler in der Erfassung der Entfernung zum Vorderfahrzeug nur zu kleinen Änderungen (beispielsweise weniger als 1%, 2%, 5%, 10% oder 20%) der ersten Schätzung der Geschwindigkeit und/oder Entfernung führen.

Auf diese Weise kann bei der Schätzung solange das Vorderfahrzeug berücksichtigt werden, wie es sich tatsächlich auf dem Pfad, insbesondere Fahrspur, vor dem Fahrzeug befindet; solange findet eine Filterung der Entfernung statt. Ab dem Moment, in dem das Vorderfahrzeug den Pfad, insbesondere die Fahrspur, verlässt, was durch den Wert der Querablage erkannt wird, wird die ungefilterte Entfernung verwendet, um die neue Situation korrekt bei der Schätzung zu berücksichtigen. Anschließend kann wieder die gefilterte Entfernung berücksichtigt werden.

Als Filterung kann auch eine segmentweise Überprüfung (auch segmentweise Glättung und Prädiktion genannt) zum Einsatz kommen, wie sie im Folgenden beschrieben wird. Für diese Filterung wird der Verlauf der Entfernung zum Vorderfahrzeug in Segmente eingeteilt. Die Länge eines Segments bestimmt sich nach dem Wert der Entfernung zum Vorderfahrzeug. Zeigt dieser Wert einen Sprung, so markiert dies das Ende eines Segments und gleichzeitig den Beginn eines anderen Segments. Durch die Filterung werden Segmente als gültig oder ungültig klassifiziert und zwar je nachdem, wie lange der Wert der Entfernung zum Vorderfahrzeug auf einem Wert ungefähr konstant bleibt oder nur eine vorbestimmte maximale Änderung erfährt, also über welche Entfernung, die das eigene Fahrzeug fährt, oder über welche Zeit kein Sprung vorhanden ist. Bleibt der Wert beispielsweise innerhalb einer vorbestimmten Entfernung, die das eigene Fahrzeug fährt, wie 2 m, 5 m, 10 m, 100 m, 200 m oder 300 m Länge, ungefähr konstant so wird das Segment als gültig klassifiziert. Ebenso kann ein Segment als gültig klassifiziert werden, in dem der Wert in einer vorbestimmten Zeitspanne wie 0,1 s; 0,2 s; 0,5 s oder 1 s ungefähr konstant bleibt. Der Verlauf der Entfernung zum Vorderfahrzeug wird dann in den als ungültig klassifizierten Segmenten ergänzt und dieser ergänzte Verlauf bei dem Erstellen der Schätzung berücksichtigt. Mit anderen Worten: Es wird die Filterung des Verlaufes der Entfernung zum Vorderfahrzeug bei der Schätzung berücksichtigt. Die Ergänzung des Verlaufes kann durch ein Interpolieren zwischen dem letzten Wert des dem ungültigen Segment vorhergehenden Segmentes und dem ersten Wert des dem ungültigen Segmentes nachfolgenden Segment ausgeführt werden. Falls ein Segment als ungültig klassifiziert wird, der Verlauf der Querablage allerdings eine vorbestimmte Bedingung erfüllt, so wird der Verlauf der Entfernung für dieses als ungültig klassifizierte Segment allerdings nicht geändert, sondern beibehalten. Die Bedingung kann beispielsweise sein, dass die Querablage einen Schwellwert überschreitet und/oder anhand der Querablage erkannt wird, dass das Vorderfahrzeug abbiegt oder die Fahrspur (den Pfad) wechselt. Insgesamt wird auch in dieser segmentweisen Überprüfung also bei der (ersten) Schätzung der Verlauf der Entfernung zum Vorderfahrzeug und eine Filterung des Verlaufs der erfassten Entfernung in Abhängigkeit von dem Verlauf der Querablage berücksichtigt. Eine Implementierung dieses Verfahrens der Filterung kann gemäß den in Anhang 1 als abstrakter Quellcode angegebenen Schritten ausgeführt werden.

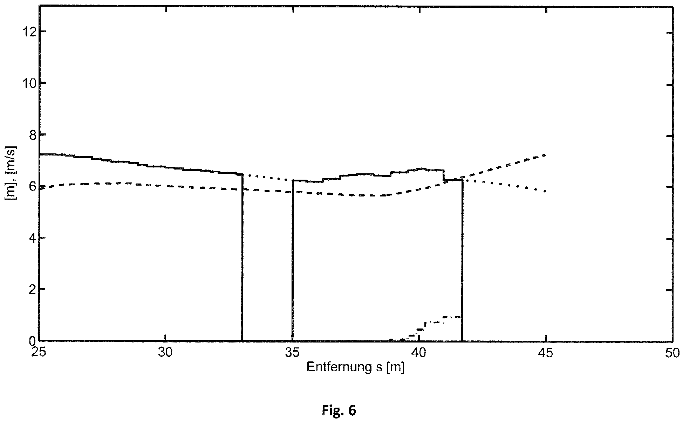

Im Folgenden wird anhand eines Beispiels und mit Bezug auf Fig. 6 kurz eine Übersicht über das Zusammenwirken von für das Verfahren wichtige Parameter gegeben. Fig. 6 zeigt verschiedene Parameter für das Fahrmanöver einer Durchfahrt eines Fahrzeugs durch eine Kreuzung. Der Pfad für dieses Fahrmanöver führt dementsprechend gerade durch die Kreuzung und liegt in der Mitte der Fahrspur, die gerade durch die Kreuzung führt. Vor dem Fahrzeug befindet sich auf dem Pfad (und damit auf der Fahrspur, die gerade durch die Kreuzung führt) zunächst ein Vorderfahrzeug, das bei ca. 42 m abbiegt. Fig. 6 zeigt mit der gestrichelten Linie die Geschwindigkeit (in m/s) des (eigenen) Fahrzeugs auf seinem Pfad in Abhängigkeit des zurückgelegten Weges (der Entfernung s) von einem Referenzpunkt aus. Die gemessene Entfernung zum Vorderfahrzeug (durchgezogene Linie) zeigt dies mit einer abrupten Änderung an. Bei ca. 33 m bis 35 m setzt die Erkennung des Vorderfahrzeugs kurzfristig aus, was durch den Wert 0 symbolisiert wird. Es handelt sich hierbei um einen kurzzeitigen Fehler der Umfeldsensorik des Fahrzeugs. Dieser Fehler würde bei der Schätzung der Geschwindigkeit und der Entfernung berücksichtigt werden und dementsprechend zu schlechteren Schätzungen führen. Wie ausgeführt wird vorgeschlagen die Entfernung zum Vorderfahrzeug einer Filterung zu unterziehen.

Mit der gepünktelten Linie wird der Verlauf der Entfernung dargestellt, wie er sich durch eine Filterung, hier eine segmentweise Überprüfung (also Glättung und Prädiktion), ergibt. Die Filterung des Verlaufes wird dabei zur Entfernung von s = 45 m ausgeführt. Zu diesem Auswertungspunkt ist das Segment nach dem Sprung des Verlaufes der Entfernung zum Vorderfahrzeug bei ungefähr s= 42 m als ungültig klassifiziert. Es findet also eine Glättung des Verlaufes durch die Filterung statt.

Gleichzeitig steigt bei der Entfernung s = 42 m allerdings die erfasste Querablage des Vorderfahrzeugs an, die durch eine gestrichpünktelte Linie dargestellt wird, und kündigt damit das Verlassen des Pfades durch das Vorderfahrzeug an. Diese Ankündigung des Verlassens durch die Querablage besteht in einem Ansteigen der Querablage und einem Überschreiten eines vorher festgelegten Schwellwertes, der sich an der Breite einer Fahrspur orientieren kann. Wird die Überschreitung erkannt, so wird für die bei der Schätzung berücksichtigte Entfernung nicht die Filterung der Entfernung zum Vorderfahrzeug verwendet, sondern die gemessene Entfernung, die folglich für diesen zeitlichen Moment oder für eine bestimmte Strecke von der Schätzung der Geschwindigkeit und Entfernung berücksichtigt wird.

Die Schätzung der Geschwindigkeit und der Entfernung beruht somit abschnittsweise auf dem gefilterten Verlauf der Entfernung und dem erfassten Verlauf der Entfernung, wobei die Abschnitte durch das Erkennen eines Verlassens des Pfades bestimmt werden. Es können sich also mehrere Abschnitte aneinanderreihen, in denen abwechselnd der gefilterte Verlauf der Entfernung und der erfasste Verlauf der Entfernung berücksichtigt werden.

In einer Weiterbildung umfasst das Verfahren ferner das Erkennen eines Verlassens des Pfades, insbesondere eines Fahrspurwechsels, des Vorderfahrzeugs anhand des Verlaufs der Querablage des Vorderfahrzeugs, insbesondere dadurch, dass die Querablage einen vordefinierten Schwellwert überschreitet; Wobei für die erste Schätzung für den oder die Abschnitte des Verlaufes der Querablage, in dem/denen kein Verlassen des Pfades erkannt wird, die Filterung des Verlaufs der erfassten Entfernung (also dessen entsprechender Abschnitt) berücksichtigt wird; Wobei für die erste Schätzung für den oder die Abschnitte des Verlaufes der Querablage, in dem/denen ein Verlassen des Pfades erkannt wird, der Verlauf der erfassten Entfernung (also dessen entsprechender Abschnitt) berücksichtigt wird. Ziel ist es, für denjenigen Zeitraum oder diejenige Strecke, in dem beziehungsweise der das Vorderfahrzeug den Pfad belegt, den gefilterten Verlauf der Entfernung zum Vorderfahrzeug bei der Schätzung zu verwenden und für denjenigen Zeitraum oder diejenige Strecke, in dem beziehungsweise der das Vorderfahrzeug den Pfad nicht belegt, den erfassten ( ungefilterten) Verlauf der Entfernung zum Vorderfahrzeug bei der Schätzung zu verwenden. Somit wird abschnittsweise die Filterung des Verlaufes oder der erfasste Verlauf zur Schätzung verwendet. Es kann vorgesehen sein, dass sich der Abschnitt, in dem ein Verlassen des Pfades erkannt wird, auf einen vorbestimmten Zeitraum oder für eine vorbestimmte Strecke (ausgedrückt in einer Entfernungsangabe) ausdehnt nach dem Überschreiten des Schwellwertes. Es kann somit vorgesehen sein, die Schätzung der Geschwindigkeit und Entfernung nur für einen Zeitraum oder eine Strecke (ausgedrückt in einer Entfernungsangabe) nicht auf der Filterung des Verlaufes der Entfernung zum Vorderfahrzeug zu basieren, sondern die Schätzung für diesen Zeitraum oder diese Strecke auf dem erfassten Verlauf der Entfernung zu basieren.

In einer vorteilhaften Weiterbildung kann vorgesehen sein, dass das Erkennen des Verlassens des Pfades durch das Vorderfahrzeug anhand des nahezu gleichzeitigen Erfassens, dass die Entfernung zum Vorderfahrzeug auf ein Verlassen des Pfades hindeutet (insbesondere eine abrupte Änderung festgestellt wird) und dass die Querablage einen vordefinierten Schwellwert überschreitet. Auf diese Weise kann durch die Beobachtung von zwei Messwerten, die beide auf ein Verlassen des Pfades durch das Vorderfahrzeug hindeuten müssen, besonders robust festgestellt werden, dass das Vorderfahrzeug den Pfad verlassen hat.

In einer bevorzugten Weiterbildung umfasst das Verfahren das Rücksetzen der Filterung des Verlaufs nach dem Erkennen des Verlassens des Pfades durch das Vorderfahrzeug, insbesondere derart, dass die Filterung die vor dem Erkennen des Verlassens gemessenen Entfernungen zum Vorderfahrzeug nicht mehr berücksichtigt. Somit ergibt sich, dass, wenn das Vorderfahrzeug den Pfad verlassen hat, zunächst die erfasste Entfernung selbst berücksichtigt wird und dann (gegebenenfalls nach kurzer Zeit) wieder auf den gefilterten Verlauf der Entfernung umgestiegen wird, wobei durch das Erfassen des Verlassens die Filterung rückgesetzt wurde. Dadurch werden für den gefilterten Verlauf nur neue, also gemessene Entfernungen nach dem Verlassen des Pfades durch das Vorderfahrzeug berücksichtigt.

In einer anderen bevorzugten Weiterbildung basiert die erste Schätzung auch auf der Differenzgeschwindigkeit zum Vorderfahrzeug. Dies entspricht den Vorgaben des Intelligent Driver Models. Die Differenzgeschwindigkeit zum Vorderfahrzeug kann mit aus dem Stand der Technik bekannten Verfahren ermittelt werden, beispielsweise mittels Radar, Lidar oder ähnlichem.

In einer Weiterbildung ist das Verfahren in die Vorhersage eines Fahrmanövers eines Fahrzeugs eingebettet: Erfassen der Geschwindigkeit des Fahrzeugs in einer zweiten Entfernung des Fahrzeugs entlang eines Pfades von einem Referenzpunkt; Wobei sich das Fahrzeug zu einem zweiten Zeitpunkt in der zweiten Entfernung befindet; Erstellen von mindestens einer zweiten Schätzung der Geschwindigkeit des Fahrzeugs für den zweiten Zeitpunkt und der Entfernung des Fahrzeugs von dem Referenzpunkt für den zweiten Zeitpunkt; Wobei die zweite Schätzung jeweils auf der Geschwindigkeit des Fahrzeugs in der ersten Entfernung, der ersten Entfernung vom Referenzpunkt, und dem zweiten Zeitpunkt basiert; Wobei die zweite Schätzung auf einer Annahme eines zweiten Fahrmanövers basiert; Ermitteln einer Maßzahl bezüglich der Eintrittswahrscheinlichkeit einer Schätzung für jede Schätzung unter Berücksichtigung der erfassten Geschwindigkeit des Fahrzeugs in der zweiten Entfernung vom Referenzpunkt und der zweiten Entfernung selbst; Vorhersagen des Fahrmanövers basierend auf den ermittelten Maßzahlen. Mithilfe dieses Verfahrens kann somit eine Vorhersage zum Fahrmanöver getroffen werden. Bei der Erstellung der Vorhersage (genauer: bei der Schätzung der Geschwindigkeit und Entfernung des Fahrzeugs im zweiten Zeitpunkt) werden Vorderfahrzeuge berücksichtigt und Fehler in der Sensorerfassung versucht auszugleichen. Dies erhöht die Genauigkeit und Robustheit der Vorhersage des Fahrmanövers.

In einer bevorzugten Weiterbildung basiert der erste vorausbestimmte Verlauf der Wunschgeschwindigkeit für das erste Fahrmanöver auf der Geometrie eines ersten Pfades für das erste Fahrmanöver.

Die Bestimmung des ersten Verlaufes der Wunschgeschwindigkeit erfolgt basierend auf der Geometrie des Pfades. Eine Aufzeichnung von Geschwindigkeitsverläufen von Testfahrten wird hierfür nicht verwendet. Auf diese Weise können Verläufe von Wunschgeschwindigkeiten auch für Strecken oder Kreuzungen erstellt werden, für die keine Aufzeichnungen von Geschwindigkeitsverläufen vorliegen. Die Geometrie des ersten Pfades kann jedoch weiterhin durch Aufzeichnungen und statistische Auswertung von Testfahrten gewonnen werden. Ebenso ist es aber auch denkbar, für die Bestimmung des ersten und zweiten Verlaufes der Wunschgeschwindigkeiten die Geometrien der Pfade für das erste Fahrmanöver aus in Landkarten vorhandenen Geometrien von Streckenabschnitten oder Kreuzungen zu gewinnen. Gegebenenfalls müssen dafür hochgenaue Karten verwendet werden. Allerdings wird für den Pfad keine zentimetergenaue Beschreibung der kompletten Topologie der Kreuzung oder aus dem Pfad gewonnener Krümmungsprofile benötigt. Das vorgeschlagene Verfahren ist somit robust gegenüber der Güte der Fahrzeugeigenlokalisierung.

Es ist evident, dass auch für mehr als zwei Fahrmanöver Schätzungen bereitgestellt werden können. Generell kann jedes angenommene Fahrmanöver als eine Hypothese bezeichnet werden.

Der erste Pfad kann die von einem Fahrzeug typischerweise zurückgelegten Wege in einer Kreuzung und gegebenenfalls einige Meter, 10 m, 20 m bis hunderte Meter davor und danach beschreiben. Es kann auch vorgesehen sein, dass für eine ganze Landkarte die genauen Verläufe von Pfaden angegeben werden, darunter der erste Pfad. Dann kann diese Quelle für den ersten Pfad verwendet werden, der gegebenenfalls einen Ausschnitt eines angegebenen Pfades darstellt.

Die Vorhersage des Fahrmanövers basierend auf den ermittelten Maßzahlen kann in der Auswahl des Fahrmanövers bestehen, das die höchste Maßzahl aufweist. Weiterhin kann das Verfahren das Ausgeben der für das erste und das zweite Fahrmanöver jeweils ermittelten Maßzahl umfassen. Diese Ausgabe der betrachteten Fahrmanöver und der ermittelten Maßzahlen kann von einem Fahrerassistenzsystem verwendet werden, um Warnungen bereitzustellen. Es kann im Verfahren vorkommen, dass zwar die Maßzahl für ein Fahrmanöver höher ist als die anderen oder die andere Maßzahl, jedoch die höchste und eine weitere oder weitere Maßzahlen dicht beieinander liegen. In solch einem Fall kann die Ausgabe von Warnungen durch ein Fahrerassistenzsystem für die dicht beieinander liegenden Fahrmanöver sinnvoll sein.

Insbesondere können die ermittelten Maßzahlen verwendet werden, um Warnungen vor möglichen Konfliktsituationen im Hinblick auf die Eintrittswahrscheinlichkeit des zugehörigen Manövers zu priorisieren. In der Regel wird die Warnung mit der höchsten Maßzahl am höchsten priorisiert und somit an den Fahrer ausgegeben. Je nach Situation kann es jedoch auch vorkommen, dass ein Manöver mit einer kleineren Maßzahl als der höchsten Maßzahl höher priorisiert wird als das Manöver mit der höchsten Maßzahl. Insbesondere ist dies dann der Fall, wenn die zugehörige Konfliktsituation als besonders kritisch einzuschätzen ist.

Die Maßzahl für eine Eintrittswahrscheinlichkeit einer Schätzung kann ein entscheidungserheblicher Anteil (beziehungsweise Term) oder der entscheidungserhebliche Anteil (beziehungsweise Term) einer vollständigen Berechnung einer absoluten Eintrittswahrscheinlichkeit sein; also der Teil der Berechnung, durch den die Schätzungen in eine Rangfolge gebracht werden können, zumindest näherungsweise oder mit einer hinreichenden Genauigkeit. Unter bestimmten Annahmen kann die Maßzahl sogar die Eintrittswahrscheinlichkeit selbst sein. Die Maßzahl kann ein sogenannter Score sein oder eine unnormierte Eintrittswahrscheinlichkeit sein. Gemäß eines zweiten Aspekts der Erfindung umfasst ein Verfahren zum Schätzen einer zukünftigen Beschleunigung eines Fahrzeugs von einem Referenzpunkt, Folgendes: Erfassen der Geschwindigkeit des Fahrzeugs in einer ersten Entfernung des Fahrzeugs entlang eines Pfades von einem Referenzpunkt; Wobei sich das Fahrzeug zu einem ersten Zeitpunkt in der ersten Entfernung vom Referenzpunkt befindet; Erfassen der Entfernung und des Verlaufs der Entfernung des Fahrzeugs zu einem vor dem Fahrzeug fahrenden Vorderfahrzeug zwischen dem ersten und einem zweiten Zeitpunkt; Wobei sich das Vorderfahrzeug beim Erfassen auf einem Pfad befindet, auf dem sich das Fahrzeug unter der Annahme eines ersten Fahrmanövers vom ersten bis zum zweiten Zeitpunkt auch befinden wird; Erstellen von mindestens einer ersten Schätzung der Beschleunigung des Fahrzeugs für den zweiten Zeitpunkt; Wobei die erste Schätzung jeweils auf der Geschwindigkeit des Fahrzeugs in der ersten Entfernung, der ersten Entfernung vom Referenzpunkt und dem zweiten Zeitpunkt basiert; Wobei die erste Schätzung ferner auf einem ersten im Voraus bestimmten Verlauf der Wunschgeschwindigkeit des Fahrzeugs für die Annahme des ersten Fahrmanövers in Abhängigkeit der Entfernung des Fahrzeugs vom Referenzpunkt basiert; Gekennzeichnet durch: Erfassen der Querablage und des Verlaufs der Querablage des Vorderfahrzeugs zwischen dem ersten und zweiten Zeitpunkt; Wobei die Querablage der senkrechte Abstand der Fahrzeugmittelachse, insbesondere der Mitte oder des hinteren Endes der Fahrzeugmittelachse, zu dem Pfad ist; wobei die erste Schätzung auch den Verlauf der Entfernung zum Vorderfahrzeug und eine Filterung, insbesondere Tiefpassfilterung oder Glättung, des Verlaufs der erfassten Entfernung in Abhängigkeit von dem Verlauf der Querablage berücksichtigt.

Gemäß dem zweiten Aspekt wird somit als Schätzung nicht die Geschwindigkeit und/oder die Entfernung berechnet, sondern die Beschleunigung. Die Vorteile gegenüber dem Stand der Technik sind ähnlich wie bei der Schätzung der Geschwindigkeit und/oder Entfernung. Die Weiterbildungen der Schätzung der Beschleunigung und die Vorteile der Weiterbildungen ähneln denen der Schätzung der Geschwindigkeit und/oder Entfernung.

Auch die Schätzung der Beschleunigung kann in ein Verfahren zur Vorhersage eines Fahrmanövers eingebettet sein. Ein solches Verfahren umfasst ferner: Erfassen der Beschleunigung des Fahrzeugs in einer zweiten Entfernung des Fahrzeugs entlang eines Pfades von einem Referenzpunkt, wobei die erste und die zweite Entfernung insbesondere gleich sind; Wobei sich das Fahrzeug zum zweiten Zeitpunkt in der zweiten Entfernung befindet, wobei der erste und der zweite Zeitpunkt insbesondere gleich sind; Erstellen von mindestens einer zweiten Schätzung der Beschleunigung des Fahrzeugs für den zweiten Zeitpunkt; Wobei die zweite Schätzung jeweils auf der Geschwindigkeit des Fahrzeugs in der ersten Entfernung, der ersten Entfernung vom Referenzpunkt, und dem zweiten Zeitpunkt basieren; Wobei die zweite Schätzung auf einer Annahme eines zweiten Fahrmanövers basiert; Ermitteln einer Maßzahl bezüglich der Eintrittswahrscheinlichkeit einer Schätzung für jede Schätzung unter Berücksichtigung der erfassten Beschleunigung des Fahrzeugs in der zweiten Entfernung vom Referenzpunkt; Vorhersagen des Fahrmanövers basierend auf den ermittelten Maßzahlen. Basierend auf den Schätzergebnissen wird dann die Maßzahl berechnet und die Vorhersage getätigt.

In einer vorteilhaften Ausprägung kann die Maßzahl für jede Schätzung auch aus dem Mittelwert der Maßzahlen in dem Fall, dass der Fahrer das angenommene Manöver tatsächlich durchführt, über einen vorteilhaft gewählten Zeitraum hinweg berechnet werden.

In einer weiteren vorteilhaften Ausprägung können mehrere Schätzungen über einen Zeitraum ausgeführt werden und jeweils die Maßzahlen für jede Schätzungen bestimmt werden. Diese Maßzahlen können dann für alle Schätzungen zu einer Annahme zu einem Fahrmanöver gemittelt werden. Auf dieser Mittelung kann dann die Vorhersage basieren. Die Mittelungen können gemeinsam mit den zugrundeliegenden Annahmen zum Fahrmanöver ausgegeben werden.

Die Vorhersage des Fahrmanövers basierend auf den ermittelten Maßzahlen kann in der Auswahl des Fahrmanövers bestehen, das die höchste Maßzahl aufweist. Weiterhin kann das Verfahren das Ausgeben der für das erste und das zweite Fahrmanöver jeweils ermittelten Maßzahl umfassen. Diese Ausgabe der betrachteten Fahrmanöver und der ermittelten Maßzahlen kann von einem Fahrerassistenzsystem verwendet werden, um Warnungen bereitzustellen. Es kann im Verfahren vorkommen, dass zwar die Maßzahl für ein Fahrmanöver höher ist als die anderen oder die andere Maßzahl, jedoch die höchste und eine weitere oder weitere Maßzahlen dicht beieinander liegen. In solch einem Fall kann die Ausgabe von Warnungen durch ein Fahrerassistenzsystem für die dicht beieinander liegenden Fahrmanöver sinnvoll sein.

Insbesondere können die ermittelten Maßzahlen verwendet werden, um Warnungen vor möglichen Konfliktsituationen im Hinblick auf die Eintrittswahrscheinlichkeit des zugehörigen Manövers zu priorisieren. In der Regel wird die Warnung mit der höchsten Maßzahl am höchsten priorisiert und somit an den Fahrer ausgegeben. Je nach Situation kann es jedoch auch vorkommen, dass ein Manöver mit einer kleineren Maßzahl als der höchsten Maßzahl höher priorisiert wird als das Manöver mit der höchsten Maßzahl. Insbesondere ist dies dann der Fall, wenn die zugehörige Konfliktsituation als besonders kritisch einzuschätzen ist.

Die Maßzahl für eine Eintrittswahrscheinlichkeit einer Schätzung kann ein entscheidungserheblicher Anteil (beziehungsweise Term) oder der entscheidungserhebliche Anteil (beziehungsweise Term) einer vollständigen Berechnung einer absoluten Eintrittswahrscheinlichkeit sein, also der Teil der Berechnung, durch den die Schätzungen in eine Rangfolge gebracht werden können, zumindest näherungsweise oder mit einer hinreichenden Genauigkeit. Unter bestimmten Annahmen kann die Maßzahl sogar die Eintrittswahrscheinlichkeit selbst sein. Die Maßzahl kann ein sogenannter Score sein oder eine unnormierte Eintrittswahrscheinlichkeit sein.

In einer Weiterbildung ist die Geometrie des ersten und des zweiten Pfades der zweidimensionale Verlauf des jeweiligen Pfades. In einer anderen Weiterbildung wurde der erste und der zweite vorausbestimmte Verlauf der Wunschgeschwindigkeit basierend auf der Krümmung des ersten beziehungsweise zweiten Pfades bestimmt. Die Krümmung kann dabei abschnittsweise angegeben werden mithilfe von sogenannten smooth circular arc splines, wie sie in der oben genannten Veröffentlichung "Driver Intent Interface at Urban Intersections using the Intelligent Driver Model" beschrieben sind.

In einer Weiterbildung wurde der erste und der zweite vorausbestimmte Verlauf der Wunschgeschwindigkeit basierend auf der Geometrie eines Abschnitts des vorausliegenden ersten beziehungsweise zweiten Pfades bestimmt, der von einem Fahrzeug noch zu durchfahren wäre. Die Wunschgeschwindigkeit richtet sich somit nach dem Verlauf des Pfades, der für ein Fahrzeug, das sich auf diesem Pfad befindet, noch zu durchfahren ist.

In einer bevorzugten Weiterbildung wurde der erste und der zweite Verlauf der Wunschgeschwindigkeit basierend auf einem ersten Fahrermodell bestimmt. Das Fahrermodell gibt eines oder mehrere der Folgenden vor: der maximale Betrag der lateralen Beschleunigung, die maximale Geschwindigkeit, die minimale Ableitung der Wunschgeschwindigkeit nach der Entfernung. Diese Vorgaben beeinflussen die Verläufe der Wunschgeschwindigkeit entscheidend. Durch die Vorgabe der maximalen lateralen Beschleunigung wird die Geschwindigkeit begrenzt, mit der eine Kurve durchfahren wird. Ein sportlicher Fahrer beispielsweise wird höhere laterale Beschleunigungen akzeptieren, als ein komfortorientierter Fahrer. Ebenso können unterschiedliche Fahrer andere maximale Geschwindigkeiten bevorzugen. Schließlich wird der Verlauf der Wunschgeschwindigkeit in der Anfahrt der Kurve, also vor einem Abbiegevorgang, wesentlich durch den minimalen Betrag der Ableitung der Wunschgeschwindigkeit nach der Entfernung, also der vom Fahrzeug zurückgelegten Strecke, beeinflusst. Ein kleinerer minimaler Betrag repräsentiert ein eher spätes aber starkes Bremsen vor einer Kurve, während ein höherer minimaler Betrag der Ableitung ein eher sanftes Bremsen oder negative Beschleunigung beziehungsweise geringe negative Beschleunigungen repräsentiert. Die Eigenschaft "minimal" von Werten bezeichnet hierin die negative Zahl (<0), deren Betrag am größten ist. Sind zum Beispiel die Werte -2 und -5 gegeben, so ist -5 der minimale Wert.

In einer Weiterbildung umfasst das Verfahren ferner: Erstellen einer weiteren oder einer Gruppe von weiteren Schätzungen der Geschwindigkeit des Fahrzeugs für den zweiten Zeitpunkt und der Entfernung des Fahrzeugs von dem Referenzpunkt für den zweiten Zeitpunkt; Wobei die eine weitere oder jede Schätzung der Gruppe auf der Geschwindigkeit des Fahrzeugs in der ersten Entfernung, der ersten Entfernung vom Referenzpunkt und dem zweiten Zeitpunkt basieren; Wobei die eine weitere oder jede Schätzung der Gruppe ferner auf einem dritten oder jeweils weiteren im Voraus bestimmten Verlauf der Wunschgeschwindigkeit des Fahrzeugs in Abhängigkeit der Entfernung des Fahrzeugs vom Referenzpunkt für die erste Annahme zum Fahrmanöver basiert; wobei der dritte oder jeder weitere Verlauf der Wunschgeschwindigkeit basierend auf der Geometrie des vom Fahrzeug vom Referenzpunkt aus zu durchfahrenden ersten Pfades für die erste Annahme zum Fahrmanöver bestimmt wird, wobei der dritte oder jeder weitere Verlauf der Wunschgeschwindigkeit basierend auf einem zweiten oder jeweils weiteren Fahrermodell bestimmt wurde, das jeweils eines oder mehrere der Folgenden vorgibt: der maximale Betrag der lateralen Beschleunigung, die maximale Geschwindigkeit und der minimale Wert der Ableitung der Wunschgeschwindigkeit nach der Entfernung.

Es werden also weitere Schätzungen bereitgestellt, die jeweils unter anderen Annahmen zum Fahrermodell bestimmt werden. Auf diese Weise können bei der Vorhersage eines Fahrmanövers verschiedene Fahrstile berücksichtigt werden und eine verbesserte Qualität der Vorhersage erreicht werden. In einer Weiterentwicklung kann ein Satz von Fahrermodellen ausgearbeitet werden. Dieser wird dann für die Schätzungen für jedes betrachtete Fahrmanöver verwendet.

Dieses Vorgehen zum Erstellen weiterer Schätzungen kann ebenfalls für die Schätzungen von Beschleunigungen ausgeführt werden: Dann umfasst das Verfahren ferner: Erstellen einer weiteren oder einer Gruppe von weiteren Schätzungen der Beschleunigung des Fahrzeugs für den zweiten Zeitpunkt; Wobei die eine weitere oder jede Schätzung der Gruppe auf der Geschwindigkeit des Fahrzeugs in der ersten Entfernung, der ersten Entfernung vom Referenzpunkt und dem zweiten Zeitpunkt basieren; Wobei die eine weitere oder jede Schätzung der Gruppe ferner auf einem dritten oder jeweils weiteren im Voraus bestimmten Verlauf der Wunschgeschwindigkeit des Fahrzeugs in Abhängigkeit der Entfernung des Fahrzeugs vom Referenzpunkt für die erste Annahme zum Fahrmanöver basiert und jeweils auf einer Modellannahme zur maximalen longitudinalen Beschleunigung basiert, wobei mehrere Schätzungen auf derselben Modellannahme basieren können; wobei der dritte oder jeder weitere Verlauf der Wunschgeschwindigkeit basierend auf der Geometrie des vom Fahrzeug vom Referenzpunkt aus zu durchfahrenden ersten Pfades für die erste Annahme zum Fahrmanöver bestimmt wird, wobei der dritte oder jeder weitere Verlauf der Wunschgeschwindigkeit basierend auf einem zweiten oder jeweils weiteren Fahrermodell bestimmt wurde, das jeweils eines oder mehrere der Folgenden vorgibt: der maximale Betrag der lateralen Beschleunigung, die maximale Geschwindigkeit und der minimale Wert der Ableitung der Wunschgeschwindigkeit nach der Entfernung.

KURZE BESCHREIBUNG DER ZEICHNUNGEN

Fig. 1 a zeigt die Ansicht einer beispielhaften Kreuzung.

Fig. 1b zeigt die Geometrie von mehreren Trajektorien an der beispielhaften Kreuzung gemäß einem Ausführungsbeispiel.

Fig. 1c zeigt beispielhaft zwei ermittelte Pfade für die Durchfahrt durch die Kreuzung und für das Rechts-Abbiegen des Fahrzeugs.

Fig. 2a bis 2c zeigen beispielhaft Schritte bei der Entwicklung des Verlaufes der Wunschgeschwindigkeit für einen Pfad gemäß einem Ausführungsbeispiel.

Fig. 2d zeigt einen Verlauf einer Wunschgeschwindigkeit gemäß der Berechnung nach den Fig. 2a bis 2c gemäß einem Ausführungsbeispiel.

Fig. 3 zeigt in einem Flussdiagramm die Vorhersage eines Fahrmanövers gemäß einem Ausführungsbeispiel.

Fig. 4 zeigt beispielhafte Schätzergebnisse zu der Geschwindigkeit und Entfernung sowie Auswertungen zur Wahrscheinlichkeit von einzelnen Annahmen zu Fahrmanövern.

Fig. 5 zeigt in einem Flussdiagramm die Vorhersage eines Fahrmanövers gemäß einem Ausführungsbeispiel.

Fig. 6 zeigt eine Übersicht über das Zusammenwirken von für das Verfahren wichtigen Parameter.

DETAILLIERTE BESCHREIBUNG DER AUSFÜHRUNGSBEISPIELE

Die hierin beanspruchten Verfahren werden im Zusammenhang mit der Vorhersage eines Fahrmanövers eines Fahrzeugs dargestellt.

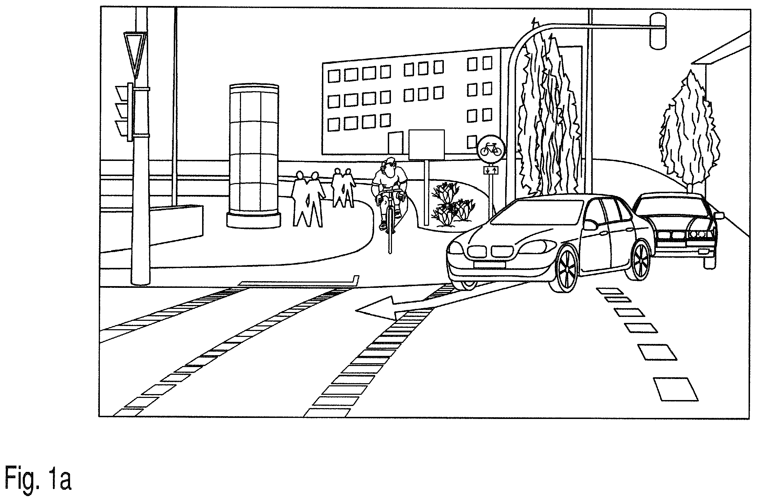

Fig. 1a zeigt eine Ansicht einer beispielhaften Kreuzung. Ein Fahrzeug (hier vorne im Bild) führt ein erstes Fahrmanöver aus, indem es beim Rechts-Abbiegen (angedeutet durch den Pfeil) an einem Fahrradüberweg hält, um Fahrradfahrer passieren zu lassen. Ein anderes Fahrmanöver wäre, wenn das Fahrzeug rechts abbiegt ohne an dem Fahrradüberweg zu halten, die Kreuzung ohne abzubiegen durchquert, oder an der Haltelinie hält.

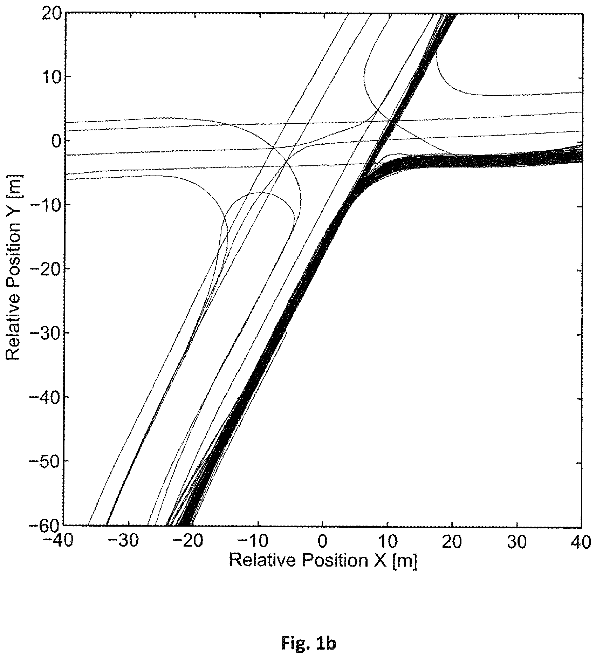

Fig. 1b zeigt die Geometrie von mehreren Trajektorien an der beispielhaften Kreuzung gemäß einem Ausführungsbeispiel. Jede Trajektorie entspricht dem Fahrweg einer Testfahrt eines Fahrzeugs, für die mittels GPS die Positionen des Fahrzeugs bestimmt wurden. Für die Trajektorien für ein Fahrmanöver, also beispielsweise alle Trajektorien, die ein Rechts-Abbiegen des Fahrzeugs beschreiben, kann eine Mittelung durch circular arc splines gebildet werden, um einen Pfad für dieses Fahrmanöver zu erhalten.

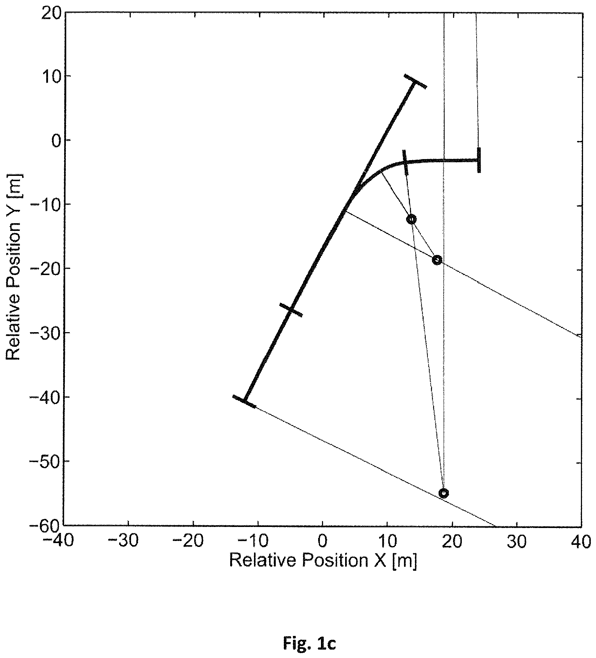

Fig. 1c zeigt zwei ermittelte Pfade, einen für die Durchfahrt durch die Kreuzung und einen für das Rechts-Abbiegen des Fahrzeugs. Beide Pfade liegen zunächst übereiander. In denen circular arc splines werden jeweils Abschnitte des Pfades als ein Kreisbogen aufgefasst. Die Abschnitte sind in Fig. 1c durch die zum Pfad senkrechten langen Linien gekennzeichnet. Für den Pfad des Rechts-Abbiegens sind weiterhin einige der Kreismittelpunkte eingezeichnet, deren Kreisbögen die Mittelung bilden. Dickere zum Pfad senkrechten Markierungen zeigen den Beginn und das Ende der Pfade an. Ferner zeigt die entlang des Pfades zweite dickere Markierungen (ungefähr bei x= -3 m und y = -25 m) die Position der Haltelinie der Ampel an (ungefähr in der Entfernung s = 13 m vom Beginn des Pfades an). Die dritte dickere Markierung entlang des Pfades (ungefähr bei x= 12 m und y= -3 m) zeigt die Position des Überwegs an (ungefähr in der Entfernung s = 46 m vom Beginn des Pfaden an).

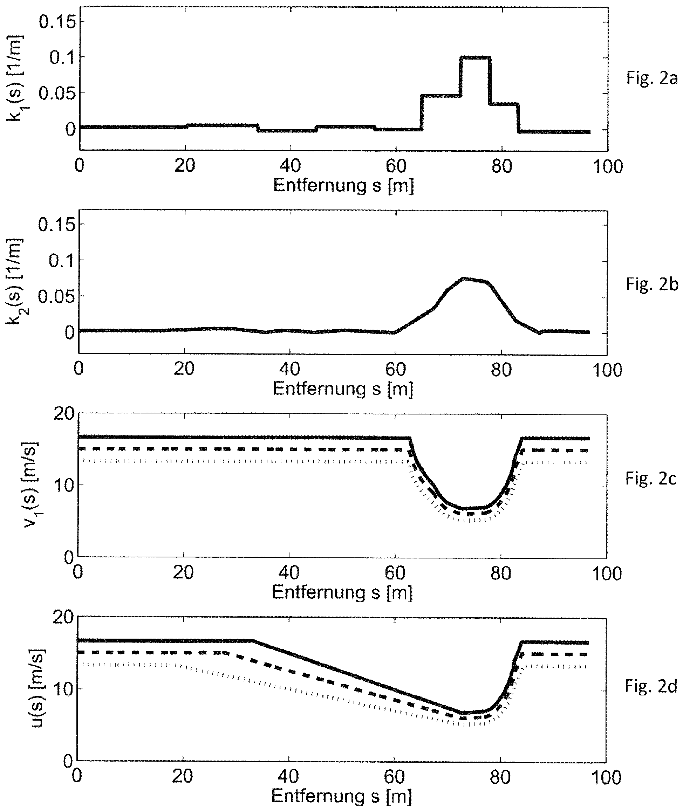

Fig. 2a zeigt für ein Abbiegemanöver den Verlauf der aus den circular arc splines gewonnenen Krümmung $k_1(s)$. Die Krümmung für eine Entfernung s ist dabei der Kehrwert des Radius des jeweiligen Kreisbogens. Wie aus Fig. 2a ersichtlich ist, führt das Fahrzeug beim Abbiegemanöver vor allem in der Entfernung zwischen 60 und 90 m eine Kurvenfahrt aus. Die Messung der Entfernung beginnt ca. 60 m vor der eigentlichen Kurve.

Für die weitere Bearbeitung wird die Krümmung dann zunächst geglättet, $k_2(s)$, wie in Fig. 2b gezeigt. Dazu kann ein gleitender Mittelwert der Krümmung $k_1$ gebildet werden. Hierdurch kann der tatsächliche Verlauf der Krümmung angenähert werden, da Straßen typischerweise eine kontinuierlich verlaufende Krümmung (ohne Sprünge) aufweisen. Des Weiteren kann eine Glättung der Krümmung dem Schneiden von Kurven Rechnung tragen.

Fig. 2c zeigt die aus der geglätteten Krümmung $k_2$ errechnete Geschwindigkeit $v_j(s)$ unter Berücksichtigung drei verschiedener Fahrermodelle (in Fig. 2c durch die durchgezogene Linie, die gestrichelte Linie und die gepunktete Linie dargestellt). Die Fahrermodelle unterschieden sich hinsichtlich der maximalen Geschwindigkeit $v_{max,j}$ wobei durch j = 1, 2 oder 3 die unterschiedlichen Fahrermodelle indiziert werden, und der maximalen lateralen Beschleunigung $a_{max.lat,j}$, wobei durch j = 1, 2 oder 3 die unterschiedlichen Fahrermodelle indiziert werden. Die hier verwendeten beispielhaften Werte für die Parameter $v_{max,j}$ und $a_{max.lat,j}$ sind in Tabelle 1 gegeben. Die Geschwindigkeit $v_j(s)$ errechnet sich aufgrund der Parameter dann nach der folgenden Formel:

$$v_j(s) = \min\left(\sqrt{\frac{a_{max.lat,j}}{k_2(s)}}, v_{max,j}\right)$$

Aufbauend auf der errechneten Geschwindigkeit $v_j(s)$ wird dann der Verlauf der Wunschgeschwindigkeit $u_j(s)$ errechnet, wiederum unter Berücksichtigung der drei verschiedenen Fahrermodelle. Fig. 2d zeigt den Verlauf der Wunschgeschwindigkeit. Die Wunschgeschwindigkeit berücksichtigt ein unterschiedlich starkes Verzögern beziehungsweise Bremsen vor der Kurve. Dazu wird die Ableitung der Geschwindigkeit $v_j(s)$ nach der Entfernung s, $g_{min,j} = \frac{dv_j}{ds}$, nach unten begrenzt, und zwar auf unterschiedliche Werte je nach Fahrermodell. Die verwendeten Werte sind in Tabelle 1 gegeben.

**Tabelle 1**

| | Fahrermodell 1 (gepunktete Linie) | Fahrermodell 2 (gestrichelte Linie) | Fahrermodell 3 (durchgezogene Linie) |
|---|---|---|---|
| $a_{max.lat,j}$ | 2,00 m/s$^2$ | 2,75 m/s$^2$ | 3,50 m/s$^2$ |
| $v_{max,j}$ | 48 km/h | 54 km/h | 60 km/h |
| $g_{min,j}$ | -0,15s$^{-1}$ | -0,20 s$^{-1}$ | -0,25 s$^{-1}$ |

Auf diese Weise wird ein Wunschgeschwindigkeitsverlauf bestimmt, und zwar für mehrere Fahrermodelle und für einen gegebenen Verlauf der Krümmung eines Pfades.

Anstatt der Krümmung des Pfades könnte auch die Ableitung des Richtungsvektors eines Pfades nach dem Weg beziehungsweise der Entfernung als Grundlage zur Berechnung des Verlaufes von Wunschgeschwindigkeiten verwendet werden beziehungsweise dessen Betrag. Die Krümmung kann als die zweite Ableitung der Querkoordinate nach der Längskoordinate (in Laufrichtung eines Pfades) angesehen werden.Die Geschwindigkeiten $v_j(s)$ und Wunschgeschwindigkeiten $u_j(s)$ in Bezug auf Fig. 2c und 2d sind für ein Abbiegemanöver ohne das Halten an einem Fußgänger- oder Fahrradüberweg berechnet. Wenn Verläufe von Wunschgeschwindigkeiten für ein Abbiegemanöver mit einem Halten an einem Fußgänger- oder Fahrradüberweg zur Verfügung gestellt werden sollen, wird dies bei dem Ermitteln einer Schätzung berücksichtigt, wie weiter unten beschrieben.

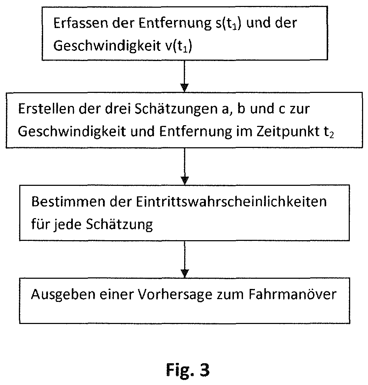

Fig. 3 zeigt in einem Flussdiagramm die Vorhersage eines Fahrmanövers gemäß einem Ausführungsbeispiel. Zu einem ersten Zeitpunkt $t_1$ wird die Entfernung $s(t_1)$ und die Geschwindigkeit $v(t_1)$ des Fahrzeugs von einem Referenzpunkt ermittelt. Dabei wird zur Feststellung der Entfernung $s(t_1)$ die beispielsweise über Satellitennavigation festgestellte Position des Fahrzeugs auf eine Position auf einem Pfad abgebildet und die Strecke des Anfangs des Pfades, also dem Referenzpunkt, bis zur abgebildeten Position bestimmt.

Auf dieser Basis werden dann drei Schätzungen a, b und c erstellt, welche Geschwindigkeit $v_{estim, a}(t_2)$, $v_{estim, b}(t_2)$, $v_{estim, c}(t_2)$ und Entfernungen $s_{estim, a}(t_2)$, $s_{estim, b}(t_2)$, $s_{estim, c}(t_2)$ das Fahrzeug zu einem zweiten Zeitpunkt aufweist. Der ersten Schätzung a wird dabei die Annahme eines ersten Fahrmanövers zugrunde gelegt, in diesem Ausführungsbeispiel ein Rechts-Abbiegen ohne Halten an einem Fahrradübergang (im Folgenden auch I3 genannt). Der zweiten Schätzung b wird dabei die Annahme eines zweiten Fahrmanövers zugrunde gelegt, in diesem Ausführungsbeispiel einer geraden Durchfahrt durch die Kreuzung (Im Folgenden auch I1 genannt). Der dritten Schätzung c wird dabei die Annahme eines dritten Fahrmanövers zugrunde gelegt, in diesem Ausführungsbeispiel ein Rechts-Abbiegen mit Halten an einem Fahrradübergang (Im Folgenden auch I4 genannt).

Die erste Schätzung a basiert ferner auf einem im Voraus bestimmten Verlauf der Wunschgeschwindigkeit $u(s)$ für das erste Fahrmanöver. Um für die erste Schätzung a die Geschwindigkeit $v_{estim, a}(t_2)$ und die Entfernung $s_{estim, a}(t_2)$ zu bestimmen wird das sogenannte Intelligent Driver Model (IDM) verwendet, das in oben genannter Veröffentlichung "Driver Intent Interface at Urban Intersections using the Intelligent Driver Model" ebenfalls verwendet und erläutert wird. Nach diesem bestimmt sich die Ableitung der Geschwindigkeit $v_{estim}(t)$ nach der Zeit gemäß folgender Formel:

$$\dot{v}(v, d) = a_{long,k} \left[ 1 - \left(\frac{v}{u}\right)^{\delta} - \left(\frac{d^*(v, \Delta v)}{d}\right)^2 \right],$$

$$d^*(v, \Delta v) = d_0 + Tv + \frac{v \Delta v}{2\sqrt{ab}}$$

Wobei:

| Parameter | Wert |
|---|---|
| $a_{long, k}$ (maximale longitudinale Beschleunigung gemäß Modellannahme k) | 0 ... 5 m/s$^2$ |
| $\delta$ | 4 |
| b | 3m/s$^2$ |
| $d_0$ | 2,0m |
| T | 0,8s |

Die Variable d bezeichnet den Abstand des Fahrzeugs zu einem Hindernis, beispielsweise einem vorausfahrenden Fahrzeug (auch Vorderfahrzeug genannt). Die Variable $\Delta v$ bezeichnet die Differenz der Geschwindigkeit zwischen dem Fahrzeug und dem Hindernis, beispielsweise dem vorausfahrenden Fahrzeug. Die maximale longitudinale Beschleunigung $a_{long, k}$ bestimmt sich nach einer anzuwendenden Modellannahme. In einer einfachen Variante der Erfindung wird nur ein Modell verwendet und beispielsweise der Wert 4 m/s$^2$ für $a_{long, k}$ verwendet. In einer Weiterbildung könnten auch für die anderen Parameter in Tabelle 1 je nach Modellannahme unterschiedliche Werte verwendet werden.

Ausgehend von der Geschwindigkeit und der Entfernung zum ersten Zeitpunkt $t_1$ können dann mithilfe des IDM und dem bekannten Verlauf der Wunschgeschwindigkeit die Geschwindigkeit des Fahrzeugs und die Entfernung des Fahrzeugs zum Zeitpunkt $t_2$ errechnet werden, $v_{estim,\,a}$ $(t_2)$ und $s_{estim,\,a}$ $(t_2)$. Dies kann unter Berücksichtigung des Verlaufs von $\dot{v}(v,d)$ während des Zeitintervalls von $t_1$ bis $t_2$ ausgeführt werden. Dazu kann auf bekannte Verfahren zurückgegriffen werden. Beispielsweise kann für diskrete zeitliche Zwischenschritte zwischen $t_1$ bis $t_2$ $\dot{v}(v,d)$ berechnet werden und somit das Fortbewegen des Fahrzeugs und dessen jeweilige Geschwindigkeit erfasst werden. Zu der Schätzung kann dann durch Summation gelangt werden. Diese Schätzung a gilt dann für die Annahme, dass das Fahrzeug das erste Fahrmanöver ausführt, beispielsweise ein Rechts-Abbiegen ohne Halten an einem Fahrradüberweg.

Des Weiteren wird die zweite Schätzung b bestimmt, diesmal für eine Annahme eines zweiten Fahrmanövers. Für die zweite Schätzung b kann ebenfalls ein vorgegebener Verlauf der Wunschgeschwindigkeit existieren. Dies kann zum Beispiel der Verlauf sein, wie er sich bei einer Durchfahrt (Geradeausfahrt) des Fahrzeugs ergeben würde. Auch dieser zweite vorgegebene Verlauf der Wunschgeschwindigkeit kann aufbauend auf der Geometrie eines Pfades für das zweite Fahrmanöver (Durchfahrt) bestimmt werden. Die Bestimmung der Geschwindigkeit und Entfernung zum zweiten Zeitpunkt kann dann auf dieselbe Art geschehen, wie für die Schätzung a, nämlich mithilfe des IDM.

Die dritte Schätzung c wird auf abgewandelte Art bestimmt. Die dritte Schätzung c basiert dabei generell auf dem Verlauf der Wunschgeschwindigkeit für die Annahme, dass das Fahrzeug ein Rechts-Abbiegen ohne Halten an dem Fahrradüberweg ausführt, und dem IDM. Um das Halten des Fahrzeugs zu simulieren wird ein virtuelles stehendes Hindernis derart platziert, dass das Fahrzeug an dem Fahrradüberweg oder allgemein einem Haltepunkt hält. Das Hindernis wird "weggenommen" sobald das Fahrzeug das Hindernis erreicht. In einer typischen Implementierung wird das Hindernis 1 bis 2 m nach diesem Punkt platziert, also um $d_0$ hinter dem Hindernis. Dieses Hindernis wird durch das IDM bei der Berechnung der Geschwindigkeit dahingehend berücksichtigt, dass das Fahrzeug zum Hindernis hin verzögert und am Hindernis zu stehen kommt. Dies wird durch die Variablen und Ausdrücke d und d* des IDM berücksichtigt.

Die erste, die zweite und die dritte Schätzung werden zum zweiten Zeitpunkt errechnet. In dem Zeitraum von der ersten Schätzung bis zur zweiten Schätzung erfasst die Umfeldsensorik des Fahrzeugs dessen Umfeld und analysiert dieses. Für jede Schätzung a, b und c wird bestimmt, ob ein Vorderfahrzeug den zu dem entsprechenden Fahrmanöver gehörenden Pfad belegt. Es wird also für die beispielsweise erste Schätzung a bestimmt, ob der Pfad, der die erste Annahme zum Fahrmanöver repräsentiert, von einem Vorderfahrzeug belegt ist. Für die jeweiligen Pfade der Schätzungen a, b und c werden nun die Entfernungen zu den jeweiligen Vorderfahrzeugen und deren Querablagen bestimmt und aufgezeichnet, so dass der Verlauf der Entfernung und der Querablage für jedes Vorderfahrzeug gespeichert ist. Der Verlauf der Entfernung wird daraufhin in einen überwachter Verlauf der Entfernung überführt. Dazu wird der Verlauf der Entfernung zunächst geglättet mit einem entsprechenden Filter, der typische Dauern von kurzzeitigen Fehlern der Umfeldsensorik berücksichtigt und derart gestaltet ist, dass das Filterergebnis bei Fehlern dieser Dauern hinreichend wenig durch den Fehler beeinflusst wird. Die Glättung wird jedoch nicht für Abschnitte des überwachten Verlaufs verwendet, an denen aufgrund der Querablage des Vorderfahrzeugs darauf geschlossen werden kann, dass das Vorderfahrzeug den Pfad verlässt, also ein vordefinierter Schwellwert überschritten wurde. An diesen Abschnitten wird der Verlauf der Entfernung zum Vorderfahrzeug nicht gefiltert sondern direkt als überwachter Verlauf der Entfernung zum Vorderfahrzeug verwendet. Der Abschnitt erstreckt sich über maximal ca. 3 bis 5 m, oder sogar 15 m nach der Stelle, an der das Verlassen des Pfades erkannt wurde. Anschließend wird der überwachte Verlauf der Entfernung mit den Werten des gefilterten Verlaufs der Entfernung fortgesetzt. Dabei wird jedoch das "Gedächtnis" bei der Filterung gelöscht. Der Filter berücksichtigt nach dem Rücksetzen also keine Werte für die Entfernung, die vor der Stelle aufgezeichnet wurden, an der das Verlassen des Pfades durch das Vorderfahrzeug erkannt wurde. Falls der Filter zum Liefern von sinnvollen Ausgaben Werte der Vergangenheit benötigt, die über diese Stelle hinausgehen, können diese Werte durch Wiederholung der Werte der Entfernung nach der Stelle des Verlassens des Pfades bereitgestellt werden. Auf diese Weise wird für jeden Pfad ein überwachter Verlauf der Entfernung zum Vorderfahrzeug bereitgestellt. Dieser überwachte Verlauf wird als Variable d in der IDM verwendet und damit bei der Erstellung der ersten Schätzungen a, b und c der Geschwindigkeiten und Entfernungen im zweiten Zeitpunkt.

Es ist direkt ersichtlich, dass die dritte Schätzung c auch als zweite Schätzung b und die zweite Schätzung b als dritte Schätzung c bezeichnet werden könnte.

Schließlich werden die Maßzahlen für die Schätzungen a, b und c ermittelt. Dabei werden die tatsächliche Geschwindigkeit $v(t_2)$ und die tatsächliche Entfernung $s(t_2)$ berücksichtigt.

Die Maßzahl bezüglich der Eintrittswahrscheinlichkeit für eine Schätzung berücksichtigt im vorliegenden Beispiel nur einen entscheidungserheblichen Term einer Berechnung einer absoluten Eintrittswahrscheinlichkeit. Die Maßzahl ist im vorliegenden Beispiel die Wahrscheinlichkeitsdichte einer Normalverteilung für die Schätzung:

$$f_{VS}\left(v_{estim,i}(t_2), s_{estim,i}(t_2)\right) = \frac{1}{2\pi\sigma_s\sigma_v}\exp(-\frac{1}{2}e^2)$$

$$e^2 = \left(\frac{s_{estim,i}(t_2) - s(t_2)}{\sigma_s}\right)^2 + \left(\frac{v_{estim,i}(t_2) - v(t_2)}{\sigma_v}\right)^2$$

Wobei der Index i für eine der Schätzungen a, b oder c steht. Für $\sigma_s$ und $\sigma_v$ sind empirisch Werte ermittelbar. Typischerweise liegen diese im Bereich von 0,6 m/s bis 1,6 m/s, vorzugsweise 1,2 m/s.

Es wird dann die Schätzung mit der höchsten Maßzahl ausgewählt und die zugehörige Annahme (Abbiegen ohne oder mit Halten, Durchfahrt) als Vorhersage des

Fahrmanövers ausgegeben. Mit anderen Worten: Das Fahrmanöver, für dessen Schätzung die höchste Maßzahl ermittelt wurde, wird als Fahrmanöver identifiziert und damit vorhergesagt. Gleichzeitig werden die betrachteten Fahrmanöver der Schätzungen a, b und c zusammen mit den jeweils für die entsprechenden Schätzungen bestimmten Maßzahlen ausgegeben.

In die Berechnung der Maßzahl der jeweiligen Schätzung kann auch Vorwissen über die statistische Verteilung der Fahrertypen sowie dem Anteil der Fahrer, die an der aktuellen Kreuzung das jeweilige Fahrmanöver durchführen, einfließen. Das Vorwissen kann dabei durch eine Wahrscheinlichkeit ausgedrückt werden. Das Einfließen des Vorwissenes kann ferner durch eine Multiplikation der Maßzahl mit der Wahrscheinlichkeit für das Vorwissen erfolgen.

Weiterhin können die Maßzahlen und/oder deren Multiplikation mit der Wahrscheinlichkeit für das Vorwissen gegenseitig ins Verhältnis gesetzt werden, entweder durch Berechnung einer absoluten Eintrittswahrscheinlichkeit oder beispielsweise durch Teilen jeder Maßzahl durch die Summe aller Maßzahlen. Das Resultat für jede Schätzung ist somit normiert. Dies kann für Fahrerassistenzsysteme von Bedeutung sein, deren Funktion (beispielsweise die Ausgabe von Warnungen) von absoluten Schwellwerten abhängt. Die Resultate für jede Schätzung und die zugehörigen Fahrmanöver können ausgegeben werden.

In einer Weiterbildung der gerade dargestellten Ausführungsform mit Bezug auf Fig. 3 können für jede Annahme eines Fahrmanövers Varianten der Schätzung berechnet werden. Diese Varianten repräsentieren unterschiedliche Fahrermodelle gemäß Tabelle 1 und Modellannahmen für die maximale longitudinale Beschleunigung $a_{long, k}$. In dieser Weiterbildung soll der Fall betrachtet werden, dass für jedes der Fahrmanöver Rechts-Abbiegen ohne Halten, Rechts-Abbiegen mit Halten und Durchfahrt Varianten der Schätzung gemäß der folgenden Tabelle II berechnet werden. Ferner wird in dieser Weiterbildung auf die Kreuzung gemäß Fig. 1b und 1c Bezug genommen.

**Tabelle II**

| Fahrmanöver | Fahrermodell j x Modellannahme k ($a_{long, k}$) | Virtuelles Hindernis |
|---|---|---|
| I1: Durchfahrt | {1; 2; 3} x {1,5; 2,0, 2,5} | - |
| I2: Durchfahrt mit Stop an Haltelinie der Ampel | {1; 2; 3} x {1,5; 2,0, 2,5} | 16m |
| I3: Rechts-Abbiegen ohne Hindernis | {1; 2; 3} x {1,5; 2,0, 2,5} | - |
| I4: Rechts-Abbiegen mit Hindernis | {1; 2; 3} x {1,5; 2,0, 2,5} | 46m |

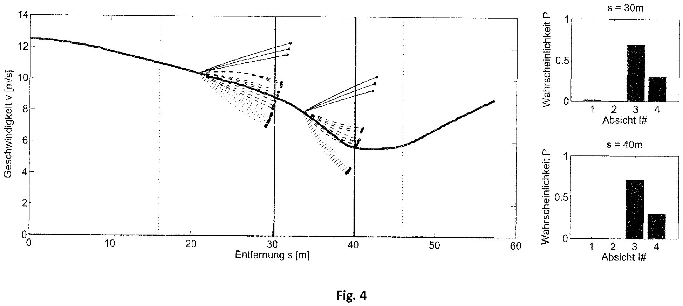

Schätzergebnisse für die Weiterbildung sind in Fig. 4 repräsentiert. Jede Schätzung ist durch eine eigene Linie repräsentiert. Für jede Schätzung wird deren Maßzahl bezüglich der Eintrittswahrscheinlichkeit berechnet, auf die selbe Art, wie in Bezug auf Fig. 3 dargestellt. Schätzungen, die für dieselbe Annahme zum Fahrmanöver gelten, haben dieselbe Strichart. Die durchgezogenen Linien stellen die Schätzungen zur Annahme einer Durchfahrt dar. Die gestrichelten Linien stellen die Schätzungen zur Annahme eines Rechts-Abbiegens ohne Halten dar und die gepunkteten Linien stellen die Schätzungen zum Rechts-Abbiegen mit Halten dar. Schließlich werden die Maßzahlen der Schätzungen für eine Annahme zum Fahrmanöver gemeinsam betrachtet und eine Maßzahl bezüglich der Eintrittswahrscheinlichkeit für dieses Fahrmanöver berechnet, beispielsweise durch Bildung eines Mittelwertes der Maßzahlen für ein Fahrmanöver. Das Fahrmanöver, für dessen Schätzung die höchste Maßzahl ermittelt wurde, wird als Fahrmanöver identifiziert und damit vorhergesagt. Gleichzeitig werden die betrachteten Fahrmanöver der Schätzungen a, b und c zusammen mit den jeweils für die entsprechenden Schätzungen bestimmten Maßzahlen ausgegeben.

In Fig. 4 werden zweimal Vorhersagen bei unterschiedlichen Entfernungen getätigt, und zwar bei s = 30 m und s= 40 m, die auf der Geschwindigkeit und Entfernung des Fahrzeugs 1 s zuvor basieren.

Fig. 4 zeigt weiterhin die Wahrscheinlichkeiten P dafür, dass die Annahme zum Fahrmanöver korrekt ist unter Beachtung der erfassten Geschwindigkeit und Entfernung des Fahrzeugs. Die Wahrscheinlichkeiten P berechnen sich durch Normierung der Summation der Wahrscheinlichkeitsdichten. Wie in Fig. 4 ersichtlich ist, ist die Annahme zum Fahrmanöver 13 die wahrscheinlichste und wird deshalb als Vorhersage ausgegeben. Da die Haltelinie in 16 m Entfernung bereits überfahren wurde ist die Wahrscheinlichkeit für 12 nicht vorhanden.

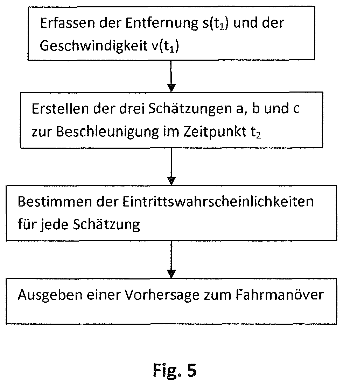

Fig. 5 zeigt in einem Flussdiagramm die Vorhersage eines Fahrmanövers gemäß einem weiteren Ausführungsbeispiel. Zu einem ersten Zeitpunkt $t_1$ wird die Entfernung $s(t_1)$ und die Geschwindigkeit $v(t_1)$ des Fahrzeugs von einem Referenzpunkt ermittelt. Dabei wird zur Feststellung der Entfernung $s(t_1)$ die beispielsweise über Satellitennavigation festgestellte Position des Fahrzeugs auf eine Position auf einem Pfad abgebildet und die Strecke des Anfangs des Pfades, also dem Referenzpunkt, bis zur abgebildeten Position bestimmt. Im Unterschied zu dem Ausführungsbeispiel gemäß Fig. 3 wird zum zweiten Zeitpunkt $t_2$ nicht ebenfalls wieder auf die Geschwindigkeit $v(t_2)$ des Fahrzeugs bei der Berechnung der Maßzahlen von Schätzungen abgestellt, sondern auf die Beschleunigung im Zeitpunkt $t_2$. Dies schließt natürlich nicht aus, dass die gemessene Beschleunigung des Fahrzeugs aufbauend auf einer zum zweiten Zeitpunkt gemessenen Geschwindigkeit beruht.

Es werden dann drei Schätzungen a, b und c erstellt, welche Beschleunigungen $a_{estim,\,a}(t_2)$, $a_{estim,\,b}(t_2)$, $a_{estim,c}(t_2)$ das Fahrzeug zu einem zweiten Zeitpunkt aufweist. Der ersten Schätzung a wird dabei die Annahme eines ersten Fahrmanövers zugrunde gelegt, in diesem Ausführungsbeispiel ein Rechts-Abbiegen ohne Halten an einem Fahrradübergang. Der zweiten Schätzung b wird dabei die Annahme eines zweiten Fahrmanövers zugrunde gelegt, in diesem Ausführungsbeispiel einer geraden Durchfahrt durch die Kreuzung. Der dritten Schätzung c wird dabei die Annahme eines dritten Fahrmanövers zugrunde gelegt, in diesem Ausführungsbeispiel ein Rechts-Abbiegen mit Halten an einem Fahrradübergang.

Wie in dem mit Bezug auf Fig. 3 erläuterten Ausführungsbeispiel basiert die erste Schätzung a auf einem im Voraus bestimmten Verlauf der Wunschgeschwindigkeit $u(s)$ für das erste Fahrmanöver. Um für die erste Schätzung a die Beschleunigung $a_{estim,\,a}(t_2)$ zu bestimmen wird, ebenso wie mit Bezug auf Fig. 3 bereits erläutert, das sogenannte Intelligent Driver Model (IDM) verwendet, das in oben genannter Veröffentlichung ebenfalls verwendet und erläutert wird. Nach diesem bestimmt sich die Ableitung der Geschwindigkeit $v_{estim}(t)$ nach der Zeit gemäß folgender Formel:

$$\dot{v}(v,d) = a_{long,k}\left[1 - \left(\frac{v}{u}\right)^{\delta} - \left(\frac{d^*(v,\Delta v)}{d}\right)^2\right],$$

$$d^*(v,\Delta v) = d_0 + Tv + \frac{v\Delta v}{2\sqrt{ab}}$$

Mit den gleichen Parametereinstellungen wie für das Ausführungsbeispiel der Fig. 3 erläutert.

Ausgehend von der Geschwindigkeit und der Entfernung zum ersten Zeitpunkt $t_1$ können dann mithilfe des IDM und dem bekannten Verlauf der Wunschgeschwindigkeit die Beschleunigung des Fahrzeugs zum Zeitpunkt $t_2$ errechnet werden, $a_{estim,\,a}(t_2)$. Dies kann unter Berücksichtigung des Verlaufs von $\dot{v}(v,d)$ während des Zeitintervalls von $t_1$ bis $t_2$ ausgeführt werden. Dazu kann auf bekannte Verfahren zurückgegriffen werden. Beispielsweise kann für diskrete zeitliche Zwischenschritte zwischen $t_1$ bis $t_2$ $\dot{v}(v,d)$ berechnet werden und somit das Fortbewegen des Fahrzeugs und dessen jeweilige Geschwindigkeit erfasst werden. Zu der Schätzung kann dann durch Summation gelangt werden. Diese Schätzung a gilt dann für die Annahme, dass das Fahrzeug das erste Fahrmanöver ausführt, beispielsweise ein Rechts-Abbiegen ohne Halten an einem Fahrradüberweg.

Des Weiteren wird die zweite Schätzung b bestimmt, diesmal für eine Annahme eines zweiten Fahrmanövers. Für die zweite Schätzung b kann ebenfalls ein vorgegebener Verlauf der Wunschgeschwindigkeit existieren. Dies kann zum Beispiel der Verlauf sein, wie er sich bei einer Durchfahrt (Geradeausfahrt) des Fahrzeugs ergeben würde. Auch dieser zweite vorgegebene Verlauf der Wunschgeschwindigkeit kann aufbauend auf der Geometrie eines Pfades für das zweite Fahrmanöver (Durchfahrt) bestimmt werden. Die Bestimmung der Beschleunigung zum zweiten Zeitpunkt kann dann auf dieselbe Art geschehen, wie für die Schätzung a, nämlich mithilfe des IDM.

Die dritte Schätzung c wird auf abgewandelte Art bestimmt. Die dritte Schätzung c basiert dabei generell auf dem Verlauf der Wunschgeschwindigkeit für die Annahme, dass das Fahrzeug ein Rechts-Abbiegen ohne Halten an dem Fahrradüberweg ausführt, und dem IDM. Um das Halten des Fahrzeugs zu simulieren wird ein virtuelles stehendes Hindernis derart platziert, dass das Fahrzeug an dem Fahrradüberweg oder allgemein einem Haltepunkt hält. Das Hindernis wird "weggenommen" sobald das Fahrzeug das Hindernis erreicht. In einer typischen Implementierung wird das Hindernis 1 bis 2 m nach diesem Punkt platziert, also um $d_0$ hinter dem Hindernis. Dieses Hindernis wird durch das IDM bei der Berechnung der Beschleunigung dahingehend berücksichtigt, dass das Fahrzeug zum Hindernis hin verzögert und am Hindernis zu stehen kommt. Dies wird durch die Variablen und Ausdrücke d und d* des IDM berücksichtigt.

Die erste, die zweite und die dritte Schätzung werden zum zweiten Zeitpunkt errechnet. In dem Zeitraum von der ersten Schätzung bis zur zweiten Schätzung erfasst die Umfeldsensorik des Fahrzeugs dessen Umfeld und analysiert dieses. Für jede Schätzung a, b und c wird bestimmt, ob ein Vorderfahrzeug den zu dem entsprechenden Fahrmanöver gehörenden Pfad belegt. Es wird also für die beispielsweise erste Schätzung a bestimmt, ob der Pfad, der die erste Annahme zum Fahrmanöver repräsentiert, von einem Vorderfahrzeug belegt ist. Für die jeweiligen Pfade der Schätzungen a, b und c werden nun die Entfernungen zu den jeweiligen Vorderfahrzeugen und deren Querablagen bestimmt und aufgezeichnet, so dass der Verlauf der Entfernung und der Querablage für jedes Vorderfahrzeug gespeichert ist. Der Verlauf der Entfernung wird daraufhin in einen überwachten Verlauf der Entfernung überführt. Dazu wird der Verlauf der Entfernung zunächst geglättet mit einem entsprechenden Filter, der typische Dauern von kurzzeitigen Fehlern der Umfeldsensorik berücksichtigt und derart gestaltet ist, dass das Filterergebnis bei Fehlern dieser Dauern hinreichend wenig durch den Fehler beeinflusst wird. Die Glättung wird jedoch nicht für Abschnitte des überwachten Verlaufs verwendet, an denen aufgrund der Querablage des Vorderfahrzeugs darauf geschlossen werden kann, dass das Vorderfahrzeug den Pfad verlässt, also ein vordefinierter Schwellwert überschritten wurde. An diesen Abschnitten wird der Verlauf der Entfernung zum Vorderfahrzeug nicht gefiltert sondern direkt als überwachter Verlauf der Entfernung zum Vorderfahrzeug verwendet. Der Abschnitt erstreckt sich über maximal ca. 3 bis 5 m oder sogar 15 m nach der Stelle, an der das Verlassen des Pfades erkannt wurde. Anschließend wird der überwachte Verlauf der Entfernung mit den Werten des gefilterten Verlaufs der Entfernung fortgesetzt. Dabei wird jedoch das "Gedächtnis" bei der Filterung gelöscht. Der Filter berücksichtigt nach dem Rücksetzen also keine Werte für die Entfernung, die vor der Stelle aufgezeichnet wurden, an der das Verlassen des Pfades durch das Vorderfahrzeug erkannt wurde. Falls der Filter zum Liefern von sinnvollen Ausgaben Werte der Vergangenheit benötigt, die über diese Stelle hinausgehen, können diese Werte durch Wiederholung der Werte der Entfernung nach der Stelle des Verlassens des Pfades bereitgestellt werden. Auf diese Weise wird für jeden Pfad ein überwachter Verlauf der Entfernung zum Vorderfahrzeug bereitgestellt. Dieser überwachte Verlauf wird als Variable d in der IDM verwendet und damit bei der Erstellung der ersten Schätzungen a, b und c der Geschwindigkeiten und Entfernungen im zweiten Zeitpunkt.

Es ist direkt ersichtlich, dass die dritte Schätzung c auch als zweite Schätzung b und die zweite Schätzung b als dritte Schätzung c bezeichnet werden könnte.

Schließlich werden die Maßzahlen für die Schätzungen a, b und c ermittelt. Dabei wird die tatsächliche Beschleunigung $a(t_2)$ mit den geschätzten Beschleunigungen zum Zeitpunkt $t_2$ verglichen.

Die Maßzahl für eine Schätzung berechnet sich nach der Formel für die Wahrscheinlichkeitsdichte:

$$f_A\left(a_{estim,i}(t_2)\right) = \frac{1}{\sqrt{2\pi}\sigma_a}\exp\left(-\frac{1}{2}e^2\right)$$

$$e^2 = \left(\frac{a_{estim,i}(t_2) - a(t_2)}{\sigma_a}\right)^2$$

Wobei der Index i für eine der Schätzungen a, b oder c steht. Für $\sigma_a$ sind empirische Werte ermittelbar, ein typischer Wert ist aus dem Bereich 0,8 m/s$^2$ bis 1,4 m/s$^2$, vorteilhafterweise 1,2 m/s$^2$.

Es wird dann die Schätzung mit der höchsten Maßzahl ausgewählt und die zugehörige Annahme (Abbiegen ohne oder mit Halten, Durchfahrt) als Vorhersage des Fahrmanövers ausgegeben. Mit anderen Worten: Das Fahrmanöver, für dessen Schätzung die höchste Maßzahl ermittelt wurde, wird als Fahrmanöver identifiziert und damit vorhergesagt. Gleichzeitig werden die betrachteten Fahrmanöver der Schätzungen a, b und c zusammen mit den jeweils für die entsprechenden Schätzungen bestimmten Maßzahlen ausgegeben.

Es kann vorgesehen sein, Wahrscheinlichkeitsdichten zusätzlich für diskrete Zeitpunkte zwischen dem ersten und dem zweiten Zeitpunkt zu berechnen und aus diesen dann die Maßzahlen für die entsprechende Annahme zum Fahrmanöver zu berechnen. Hierzu können die zu den einzelnen Zeitpunkten errechneten Wahrscheinlichkeitsdichten gemittelt werden:

$$f_{A,mean} = \frac{1}{M}\sum_{m=1}^{M} f_A\left(a_{estim,i}(t_m)\right)$$

Wobei jedes $t_m$ aus dem Zeitintervall $[t_1, t_2]$ ist und M die Anzahl der Zeitpunkte ist, über die gemittelt wird.

In die Berechnung der Maßzahl der jeweiligen Schätzung kann auch Vorwissen über die statistische Verteilung der Fahrertypen sowie dem Anteil der Fahrer, die an der aktuellen Kreuzung das jeweilige Fahrmanöver durchführen, einfließen. Das Vorwissen kann dabei durch eine Wahrscheinlichkeit ausgedrückt werden. Das Einfließen des Vorwissenes kann ferner durch eine Multiplikation der Maßzahl mit der Wahrscheinlichkeit für das Vorwissen erfolgen.

Weiterhin können die Maßzahlen und/oder deren Multiplikation mit der Wahrscheinlichkeit für das Vorwissen gegenseitig ins Verhältnis gesetzt werden, entweder durch Berechnung einer tatsächlichen Eintrittswahrscheinlichkeit oder beispielsweise durch Teilen jeder Maßzahl durch die Summe aller Maßzahlen. Das Resultat für jede Schätzung ist somit normiert. Dies kann für Fahrerassistenzsysteme von Bedeutung sein, deren Funktion (beispielsweise die Ausgabe von Warnungen) von absoluten Schwellwerten abhängt. Die Resultate für jede Schätzung und die zugehörigen Fahrmanöver können ausgegeben werden.

In einer Weiterbildung der gerade dargestellten Ausführungsform mit Bezug auf Fig. 5 können für jede Annahme eines Fahrmanövers Varianten der Schätzung berechnet werden. Diese Varianten repräsentieren unterschiedliche Fahrermodelle gemäß Tabelle 1 und Modellannahmen für die maximale longitudinale Beschleunigung $a_{long, k}$. In dieser Weiterbildung soll der Fall betrachtet werden, dass für jedes der Fahrmanöver Rechts-Abbiegen ohne Halten, Rechts-Abbiegen mit Halten und Durchfahrt Varianten der Schätzung gemäß der folgenden Tabelle II berechnet werden. Für jede Schätzung wird deren Wahrscheinlichkeitsdichte berechnet. Schließlich werden die Wahrscheinlichkeitsdichten der Schätzungen für eine Annahme zum Fahrmanöver gemeinsam betrachtet und eine Maßzahl für dieses Fahrmanöver berechnet, beispielsweise durch Bildung eines Mittelwertes der Wahrscheinlichkeitsdichten für ein Fahrmanöver. Das Fahrmanöver, für dessen Schätzung die höchste Maßzahl ermittelt wurde, wird als Fahrmanöver identifiziert und damit vorhergesagt. Gleichzeitig werden die betrachteten Fahrmanöver der Schätzungen a, b und c zusammen mit den jeweils für die entsprechenden Schätzungen bestimmten Maßzahlen ausgegeben.

## Patentansprüche

1. Verfahren zum Schätzen einer zukünftigen Geschwindigkeit und/oder Entfernung eines Fahrzeugs von einem Referenzpunkt, umfassend:

   Erfassen der Geschwindigkeit des Fahrzeugs in einer ersten Entfernung des Fahrzeugs entlang eines Pfades von einem Referenzpunkt;
   wobei sich das Fahrzeug zu einem ersten Zeitpunkt in der ersten Entfernung vom Referenzpunkt befindet;
   Erfassen der Entfernung und des Verlaufs der Entfernung des Fahrzeugs zu einem vor dem Fahrzeug fahrenden Vorderfahrzeug zwischen dem ersten und einem zweiten Zeitpunkt;
   wobei sich das Vorderfahrzeug beim Erfassen auf einem Pfad befindet, auf dem sich das Fahrzeug unter der Annahme eines ersten Fahrmanövers vom ersten bis zum zweiten Zeitpunkt auch befinden wird;
   Erstellen von mindestens einer ersten Schätzung der Geschwindigkeit des Fahrzeugs für den zweiten Zeitpunkt und/oder der Entfernung des Fahrzeugs von dem Referenzpunkt für den zweiten Zeitpunkt;
   wobei die erste Schätzung jeweils auf der Geschwindigkeit des Fahrzeugs in der ersten Entfernung, der ersten Entfernung vom Referenzpunkt und dem zweiten Zeitpunkt basiert;
   wobei die erste Schätzung der Geschwindigkeit und/oder der Entfernung ferner auf einem ersten im Voraus bestimmten Verlauf einer Wunschgeschwindigkeit des Fahrzeugs für die Annahme des ersten Fahrmanövers in Abhängigkeit der Entfernung des Fahrzeugs vom Referenzpunkt basiert;

   **gekennzeichnet durch**:

   Erfassen der Querablage und des Verlaufs der Querablage des Vorderfahrzeugs zwischen dem ersten und zweiten Zeitpunkt;
   wobei die Querablage der senkrechte Abstand der Fahrzeugmittelachse, insbesondere der Mitte oder des hinteren Endes der Fahrzeugmittelachse, zu dem Pfad ist;
   wobei die erste Schätzung auch den Verlauf der Entfernung zum Vorderfahrzeug und eine Filterung, insbesondere Tiefpassfilterung, Glättung oder segmentweise Glättung und Prädiktion, des Verlaufs der erfassten Entfernung in Abhängigkeit von dem Verlauf der Querablage berücksichtigt.

2. Verfahren nach Anspruch 1, ferner umfassend:

   Erkennen eines Verlassens des Pfades, insbesondere eines Fahrspurwechsels oder eines Abbiegens, des Vorderfahrzeugs anhand des Verlaufs der Querablage des Vorderfahrzeugs, insbesondere dadurch, dass die Querablage einen vordefinierten Schwellwert überschreitet;
   wobei für die erste Schätzung für den oder die Abschnitte des Verlaufes der Querablage, in dem beziehungsweise denen kein Verlassen des Pfades erkannt wird, die Filterung des Verlaufs der erfassten Entfernung berücksichtigt wird;
   wobei für die erste Schätzung für den oder die Abschnitte des Verlaufes der Querablage, in dem beziehungsweise denen ein Verlassen des Pfades erkannt wird, der Verlauf der erfassten Entfernung berücksichtigt wird.

3. Verfahren nach Anspruch 2, wobei das Erkennen des Verlassens des Pfades durch das Vorderfahrzeug anhand von Folgendem festgestellt wird:

Nahezu gleichzeitiges Erfassen, dass die erfasste Entfernung zum Vorderfahrzeug auf ein Verlassen des Pfades hindeutet, insbesondere eine abrupte Änderung festgestellt wird, und dass die Querablage einen vordefinierten Schwellwert überschreitet.

4. Verfahren nach einem der Ansprüche 2 oder 3, ferner umfassend:

Rücksetzen der Filterung des Verlaufs nach dem Erkennen des Verlassens des Pfades durch das Vorderfahrzeug, insbesondere derart, dass die Filterung die vor dem Erkennen des Verlassens erfassten Entfernungen zum Vorderfahrzeug nicht mehr berücksichtigt.

5. Verfahren nach einem der vorhergehenden Ansprüche,
wobei die erste Schätzung auch auf der Differenzgeschwindigkeit zum Vorderfahrzeug basiert.

6. Verfahren nach einem der vorhergehenden Ansprüche, zusätzlich zum Vorhersagen eines Fahrmanövers eines Fahrzeugs, wobei das Erstellen der ersten Schätzung die Schätzung der Geschwindigkeit und der Entfernung für den zweiten Zeitpunkt umfasst, ferner umfassend:

Erfassen der Geschwindigkeit des Fahrzeugs in einer zweiten Entfernung des Fahrzeugs entlang eines Pfades von einem Referenzpunkt;
wobei sich das Fahrzeug zu dem zweiten Zeitpunkt in der zweiten Entfernung befindet;
Erstellen von mindestens einer zweiten Schätzung der Geschwindigkeit des Fahrzeugs für den zweiten Zeitpunkt und der Entfernung des Fahrzeugs von dem Referenzpunkt für den zweiten Zeitpunkt;
wobei die zweite Schätzung jeweils auf der Geschwindigkeit des Fahrzeugs in der ersten Entfernung, der ersten Entfernung vom Referenzpunkt, und dem zweiten Zeitpunkt basiert;
wobei die zweite Schätzung auf einer Annahme eines zweiten Fahrmanövers basiert;
Ermitteln einer Maßzahl bezüglich der Eintrittswahrscheinlichkeit einer Schätzung für jede Schätzung unter Berücksichtigung der erfassten Geschwindigkeit des Fahrzeugs in der zweiten Entfernung vom Referenzpunkt und der zweiten Entfernung selbst;
Vorhersagen des Fahrmanövers basierend auf den ermittelten Maßzahlen.

7. Verfahren nach Anspruch 6, wobei
der erste vorausbestimmte Verlauf der Wunschgeschwindigkeit für das erste Fahrmanöver basierend auf der Geometrie eines ersten Pfades für das erste Fahrmanöver bestimmt wurde.

8. Verfahren zum Schätzen einer zukünftigen Beschleunigung eines Fahrzeugs von einem Referenzpunkt, umfassend:

Erfassen der Geschwindigkeit des Fahrzeugs in einer ersten Entfernung des Fahrzeugs entlang eines Pfades von einem Referenzpunkt;
wobei sich das Fahrzeug zu einem ersten Zeitpunkt in der ersten Entfernung vom Referenzpunkt befindet;
Erfassen der Entfernung und des Verlaufs der Entfernung des Fahrzeugs zu einem vor dem Fahrzeug fahrenden Vorderfahrzeug zwischen dem ersten und einem zweiten Zeitpunkt;
wobei sich das Vorderfahrzeug beim Erfassen auf einem Pfad befindet, auf dem sich das Fahrzeug unter der Annahme eines ersten Fahrmanövers vom ersten bis zum zweiten Zeitpunkt auch befinden wird;
Erstellen von mindestens einer ersten Schätzung der Beschleunigung des Fahrzeugs für den zweiten Zeitpunkt;
wobei die erste Schätzung jeweils auf der Geschwindigkeit des Fahrzeugs in der ersten Entfernung, der ersten Entfernung vom Referenzpunkt und dem zweiten Zeitpunkt basiert;
wobei die erste Schätzung ferner auf einem ersten im Voraus bestimmten Verlauf der Wunschgeschwindigkeit des Fahrzeugs für die Annahme des ersten Fahrmanövers in Abhängigkeit der Entfernung des Fahrzeugs vom Referenzpunkt basiert;

**gekennzeichnet durch**:

Erfassen der Querablage und des Verlaufs der Querablage des Vorderfahrzeugs zwischen dem ersten und zweiten Zeitpunkt;
wobei die Querablage der senkrechte Abstand der Fahrzeugmittelachse, insbesondere der Mitte oder des hinteren Endes der Fahrzeugmittelachse, zu dem Pfad ist;

wobei die erste Schätzung auch den Verlauf der Entfernung zum Vorderfahrzeug und eine Filterung, insbesondere Tiefpassfilterung oder Glättung, des Verlaufs der erfassten Entfernung in Abhängigkeit von dem Verlauf der Querablage berücksichtigt.

9. Verfahren nach Anspruch 8, ferner umfassend:

Erkennen eines Verlassens des Pfades, insbesondere eines Fahrspurwechsels oder eines Abbiegens, des Vorderfahrzeugs anhand des Verlaufs der Querablage des Vorderfahrzeugs, insbesondere dadurch, dass die Querablage einen vordefinierten Schwellwert überschreitet;
wobei für die erste Schätzung für den oder die Abschnitte des Verlaufes der Querablage, in dem beziehungsweise denen kein Verlassen des Pfades erkannt wird, die Filterung des Verlaufs der erfassten Entfernung berücksichtigt wird;
wobei für die erste Schätzung für den oder die Abschnitte des Verlaufes der Querablage, in dem beziehungsweise denen ein Verlassen des Pfades erkannt wird, der Verlauf der erfassten Entfernung berücksichtigt wird.

10. Verfahren nach Anspruch 9, wobei das Erkennen des Verlassens des Pfades durch das Vorderfahrzeug anhand des nahezu gleichzeitigen Erfassens, dass die erfasste Entfernung zum Vorderfahrzeug auf ein Verlassen des Pfades hindeutet, insbesondere eine abrupte Änderung festgestellt wird, und dass die Querablage einen vordefinierten Schwellwert überschreitet.

11. Verfahren nach einem der Ansprüche 9 oder 10, ferner umfassend:

Rücksetzen der Filterung des Verlaufs nach dem Erkennen des Verlassens des Pfades durch das Vorderfahrzeug, insbesondere derart, dass die Filterung die vor dem Erkennen des Verlassens gemessenen Entfernungen zum Vorderfahrzeug nicht mehr berücksichtigt.

12. Verfahren nach einem der Ansprüche 8 bis 11,
wobei die erste Schätzung auch auf der Differenzgeschwindigkeit zum Vorderfahrzeug basiert.

13. Verfahren nach einem der Ansprüche 8 bis 12 ferner zum Vorhersagen eines Fahrmanövers eines Fahrzeugs, umfassend:

Erfassen der Beschleunigung des Fahrzeugs in einer zweiten Entfernung des Fahrzeugs entlang eines Pfades von einem Referenzpunkt;
wobei sich das Fahrzeug zum zweiten Zeitpunkt in der zweiten Entfernung befindet;
Erstellen von mindestens einer zweiten Schätzung der Beschleunigung des Fahrzeugs für den zweiten Zeitpunkt;
wobei die zweite Schätzung jeweils auf der Geschwindigkeit des Fahrzeugs in der ersten Entfernung, der ersten Entfernung vom Referenzpunkt, und dem zweiten Zeitpunkt basieren;
wobei die zweite Schätzung auf einer Annahme eines zweiten Fahrmanövers basiert;
Ermitteln einer Maßzahl bezüglich der Eintrittswahrscheinlichkeit einer Schätzung für jede Schätzung unter Berücksichtigung der erfassten Beschleunigung des Fahrzeugs in der zweiten Entfernung vom Referenzpunkt;
Vorhersagen des Fahrmanövers basierend auf den ermittelten Maßzahlen.

14. Verfahren nach Anspruch 13, wobei
der erste vorausbestimmte Verlauf der Wunschgeschwindigkeit für das erste Fahrmanöver basierend auf der Geometrie eines ersten Pfades für das erste Fahrmanöver bestimmt wurde.

## Claims

1. A method for estimating a future speed of a vehicle and/or distance of a vehicle from a reference point, comprising the steps of:

detecting the speed of the vehicle at a first distance of the vehicle along a path from a reference point;
wherein the vehicle is located at the first distance from the reference point at a first time;
detecting the distance and the course of the distance of the vehicle from a preceding vehicle driving in front of the vehicle between the first time and a second time;

wherein, during the detection, the preceding vehicle is located on a path on which the vehicle will also be located under the assumption of a first driving manoeuvre from the first time to the second time;

creating at least one first estimation of the speed of the vehicle for the second time and/or of the distance of the vehicle from the reference point for the second time;

wherein the first estimation is based in each case on the speed of the vehicle at the first distance, the first distance from the reference point, and the second time;

wherein the first estimation of the speed and/or the distance is also based on a first course of a desired speed of the vehicle determined in advance for the assumption of the first driving manoeuvre depending on the distance of the vehicle from the reference point;

**characterised by** the step of:

detecting the lateral deviation and the course of the lateral deviation of the preceding vehicle between the first time and the second time;

wherein the lateral deviation is the perpendicular distance of the vehicle centre axis, more especially of the centre or the rear end of the vehicle centre axis, from the path;

wherein the first estimation also takes into consideration the course of the distance from the preceding vehicle and a filtering, more especially low-pass filtering, smoothing or segmented smoothing and prediction, of the course of the detected distance depending on the course of the lateral deviation.

2. A method according to claim 1, also comprising the step of:

identifying a departure from the path, more especially a lane change or a turning, of the preceding vehicle on the basis of the course of the lateral deviation of the preceding vehicle, more especially on the basis of the fact that the lateral deviation exceeds a predefined threshold value;

wherein the filtering of the course of the detected distance is taken into consideration for the first estimation for the portion or portions of the course of the lateral deviation in which no departure from the path has been identified;

wherein the course of the detected distance is taken into consideration for the first estimation for the portion or portions of the course of the lateral deviation in which a departure from the path has been identified.

3. A method according to claim 2, wherein the identification of a departure from the path by the preceding vehicle is determined on the basis of the following:

practically simultaneous detection of the fact that the detected distance from the preceding vehicle indicates a departure from the path, with an abrupt change being detected more especially, and the fact that the lateral deviation exceeds a predefined threshold value.

4. A method according to either one of claims 2 or 3, further comprising the step of:

resetting the filtering of the course after identifying a departure from the path by the preceding vehicle, more especially in such a way that the filtering no longer takes into consideration the distances from the preceding vehicle detected before the identification of the departure.

5. A method according to any one of the preceding claims,
wherein the first estimation is also based on the difference in speed compared to the preceding vehicle.

6. A method according to any one of the preceding claims, additionally for predicting a driving manoeuvre of a vehicle, wherein the creation of the first estimation comprises the estimation of the speed and the distance for the second time, said method further comprising the steps of:

detecting the speed of the vehicle at a second distance of the vehicle along a path from a reference point;

wherein the vehicle is located at the second distance at the second time;

creating at least one second estimation of the speed of the vehicle for the second time and the distance of the vehicle from the reference point for the second time;

wherein the second estimation is based in each case on the speed of the vehicle at the first distance, the first distance from the reference point, and the second time;

wherein the second estimation is based on an assumption of a second driving manoeuvre;

determining, for each estimation, a numerical value in respect of the likelihood of an estimation, under consideration of the detected speed of the vehicle at the second distance from the reference point and under consideration of the second distance itself;
predicting the driving manoeuvre based on the determined numerical values.

7. A method according to claim 6, wherein
the first predetermined course of the desired speed for the first driving manoeuvre was determined based on the geometry of a first path for the first driving manoeuvre.

8. A method for estimating a future acceleration of a vehicle from a reference point, comprising the steps of:

detecting the speed of the vehicle at a first distance of the vehicle along a path from a reference point;
wherein the vehicle is located at the first distance from the reference point at a first time;
detecting the distance and the course of the distance of the vehicle from a preceding vehicle driving ahead of the vehicle between the first time and a second time;
wherein, during the detection, the preceding vehicle is located on a path on which the vehicle will also be located under the assumption of a first driving manoeuvre from the first time to the second time;
creating at least one first estimation of the acceleration of the vehicle for the second time;
wherein the first estimation is based in each case on the speed of the vehicle at the first distance, the first distance from the reference point, and the second time;
wherein the first estimation is also based on a first course, determined in advance, of the desired speed of the vehicle for the assumption of the first driving manoeuvre depending on the distance of the vehicle from the reference point;

**characterised by** the step of:

detecting the lateral deviation and the course of the lateral deviation of the preceding vehicle between the first time and second time;
wherein the lateral deviation is the perpendicular distance of the vehicle centre axis, more especially of the centre or the rear end of the vehicle centre axis, from the path;
wherein the first estimation also takes into consideration the course of the distance from the preceding vehicle and a filtering, more especially low-pass filtering or smoothing, of the course of the detected distance depending on the course of the lateral deviation.

9. A method according to claim 8, also comprising the step of:

identifying a departure from the path, more especially a lane change or a turning, of the preceding vehicle on the basis of the course of the lateral deviation of the preceding vehicle, more especially on the basis of the fact that the lateral deviation exceeds a predefined threshold value;
wherein the filtering of the course of the detected distance is taken into consideration for the first estimation for the portion or portions of the course of the lateral deviation in which no departure from the path has been identified;
wherein the course of the detected distance is taken into consideration for the first estimation for the portion or portions of the course of the lateral deviation in which a departure from the path has been identified.

10. A method according to claim 9, wherein the identification of a departure from the path by the preceding vehicle is determined on the basis of the practically simultaneous detection of the fact that the detected distance from the preceding vehicle indicates a departure from the path, with an abrupt change being detected more especially, and the fact that the lateral deviation exceeds a predefined threshold value.

11. A method according to either one of claims 9 or 10, also comprising the step of:

resetting the filtering of the course after identifying a departure from the path by the preceding vehicle, more especially in such a way that the filtering no longer takes into consideration the distances from the preceding vehicle measured before the identification of the departure.

12. A method according to any one of claims 8 to 11,
wherein the first estimation is also based on the difference in speed compared to the preceding vehicle.

13. A method according to any one of claims 8 to 12, also comprising the following steps for predicting a driving manoeuvre of a vehicle:

detecting the acceleration of the vehicle at a second distance of the vehicle along a path from a reference point;
wherein the vehicle is located at the second distance at the second time;
creating at least one second estimation of the acceleration of the vehicle for the second time;
wherein the second estimation is based in each case on the speed of the vehicle at the first distance, the first distance from the reference point, and the second time;
wherein the second estimation is based on an assumption of a second driving manoeuvre;
determining, for each estimation, a numerical value in respect of the likelihood of an estimation, under consideration of the detected acceleration of the vehicle at the second distance from the reference point;
predicting the driving manoeuvre based on the determined numerical values.

**14.** A method according to claim 13, wherein
the first predetermined course of the desired speed for the first driving manoeuvre was determined based on the geometry of a first path for the first driving manoeuvre.

## Revendications

**1.** Procédé permettant d'estimer la vitesse future et/ ou la distance d'un véhicule d'un point de référence comprenant des étapes consistant à :

détecter la vitesse du véhicule pour une première distance du véhicule du point de référence le long d'une voie, le véhicule se trouvant à cette première distance du point de référence à un premier instant,
détecter la distance et les variations de la distance du véhicule d'un véhicule précédent se déplaçant à l'avant entre le premier instant et un second instant,
lors de la détection, le véhicule précédent se trouvant sur une voie sur laquelle le véhicule se trouvera également en supposant une première manoeuvre de déplacement entre le premier instant et le second instant, obtenir au moins une première estimation de la vitesse du véhicule au second instant et/ou de la distance du véhicule du point de référence au second instant,
la première estimation étant respectivement basée sur la vitesse du véhicule pour la première distance, la première distance du point de référence et le second instant,
la première estimation de la vitesse et/ou de la distance étant en outre basée sur des premières variations déterminées auparavant de la vitesse souhaitée du véhicule pour la supposition de la première manoeuvre de déplacement en fonction de la distance du véhicule du point de référence,
procédé **caractérisé en ce qu'**
il comporte une étape consistant à détecter le décalage transversal et les variations du décalage transversal du véhicule précédent entre le premier instant et le second instant,
le décalage transversal étant la distance perpendiculaire de l'axe médian du véhicule, en particulier de l'extrémité médiane ou arrière de l'axe médian du véhicule par rapport à la voie,
la première estimation prenant également en considération les variations de la distance du véhicule précédent et un filtrage, en particulier un filtrage passe-bas, un lissage, ou un lissage par segments et la prévision des variations de la distance détectée en fonction des variations du décalage transversal.

**2.** Procédé conforme à la revendication 1,
comprenant en outre une étape consistant à reconnaître un abandon de la trajectoire, en particulier un changement de file de circulation ou un changement de direction du véhicule précédent sur le fondement des variations du décalage transversal du véhicule précédent, en particulier du fait que le décalage transversal dépasse une valeur de seuil prédéfinie,
lors de la première estimation pour les segments des variations du décalage transversal, dans lesquels aucun abandon de la voie n'a été reconnu, le filtrage des variations de la distance détectée étant pris en considération,
lors de la première estimation, pour les segments des variations du décalage transversal dans lesquels un abandon de la voie a été reconnu, les variations de la distance détectée étant prises en considération.

**3.** Procédé conforme à la revendication 2,
selon lequel la reconnaissance de l'abandon de la voie par le véhicule précédent est déterminée par :

la détection approximativement simultanée que la distance détectée du véhicule précédent indique un abandon de la voie, en particulier une modification brusque a été déterminée et que le décalage transversal dépasse une valeur de seuil prédéfinie.

**4.** Procédé conforme à l'une des revendications 2 ou 3,
comprenant en outre une étape consistant à remettre à l'état initial le filtrage des variations après avoir reconnu l'abandon de la voie par le véhicule précédent, en particulier du fait que le filtrage ne prenne plus en considération les distances du véhicule précédent détectées avant la reconnaissance de l'abandon de la voie.

**5.** Procédé conforme à l'une des revendications précédentes, **caractérisé en ce que**
la première estimation est également basée sur la différence de vitesse par rapport au véhicule précédent.

**6.** Procédé conforme à l'une des revendications précédentes, permettant en outre de prévoir une manoeuvre de déplacement d'un véhicule, selon lequel l'obtention de la première estimation comprend l'estimation de la vitesse et de la distance au second instant, comprenant en outre des étapes consistant à :

detecter la vitesse du véhicule pour une seconde distance du véhicule d'un point de référence le long d'une voie, à ce second instant, le véhicule se trouvant à la seconde distance,
obtenir au moins une seconde estimation de la vitesse du véhicule au second instant et de la distance du véhicule du point de référence au second instant,
la seconde estimation étant respectivement basée sur la vitesse du véhicule pour la première distance, la première distance du point de référence et le second instant,
la seconde estimation étant basée sur la supposition d'une seconde manoeuvre de déplacement,
pour chaque estimation déterminer un chiffre d'indice concernant la probabilité d'arrivée de cette estimation en prenant en considération la vitesse détectée du véhicule pour la seconde distance du point de référence et la seconde distance elle-même,
prévoir la manoeuvre de déplacement sur le fondement du chiffre d'indice déterminé.

**7.** Procédé conforme à la revendication 6,
selon lequel
les premières variations prévues de la vitesse souhaitée pour la première manoeuvre de déplacement ont été déterminées sur le fondement de la géométrie d'une première voie pour la première manoeuvre de déplacement.

**8.** Procédé permettant d'estimer une accélération future d'un véhicule par rapport à un point de référence comprenant des étapes consistant à :

detecter la vitesse du véhicule pour une première distance de ce véhicule d'un point de référence le long d'une voie,
à un premier instant, le véhicule se trouvant à la première distance du point de référence,
détecter la distance et les variations de la distance du véhicule par rapport à un véhicule précédent se déplaçant à l'avant du véhicule entre le premier instant et un second instant,
lors de la détection, le véhicule précédent se trouvant sur une voie sur laquelle le véhicule se trouvera aussi en supposant une première manoeuvre de déplacement entre le premier instant et le second instant,
obtenir au moins une première estimation de l'accélération du véhicule au second instant,
la première estimation étant respectivement basée sur la vitesse du véhicule pour la première distance, la première distance du point de référence et le second instant,
la première estimation étant en outre basée sur des premières variations déterminées auparavant de la vitesse souhaitée du véhicule pour la supposition de la première manoeuvre de déplacement en fonction de la distance du véhicule du point de référence,
**caractérisé en ce qu'**
il comporte une étape consistant à :

detecter le décalage transversal et les variations du décalage transversal du véhicule précédent entre le premier instant et le second instant,
le décalage transversal étant la distance perpendiculaire de l'axe médian du véhicule, en particulier de l'extrémité médiane ou de l'extrémité arrière de l'axe médian du véhicule par rapport à la voie,
la première estimation prenant également en considération les variations de la distance du véhicule précédent et un filtrage, en particulier un filtrage passe-bas ou un lissage des variations de la distance détectée en fonction des variations du décalage transversal.

**9.** Procédé conforme à la revendication 8,
comprenant en outre une étape consistant à :

reconnaître un abandon de la voie, en particulier un changement de file de circulation ou un changement de direction du véhicule précédent sur le fondement des variations du décalage transversal du véhicule précédent, en particulier du fait que le décalage transversal dépasse une valeur de seuil prédéfinie, lors de la première estimation, pour les segments des variations du décalage transversal dans lesquels aucun abandon de la voie n'a été reconnu, le filtrage des variations de la distance détectée étant pris en considération, et
lors de la première estimation, pour les segments des variations du décalage transversal dans lesquels un abandon de la voie a été reconnu les variations de la distance détectée étant prises en considération.

**10.** Procédé conforme à la revendication 9,
selon lequel la reconnaissance de l'abandon de la voie par le véhicule précédent est déterminée de la façon suivante :

la détection approximativement simultanée que la distance détectée du véhicule précédent indique un abandon de la voie, en particulier une modification brusque a été déterminée, et que le décalage transversal dépasse une valeur de seuil prédéfinie.

**11.** Procédé conforme à l'une des revendications 9 et 10, comprenant en outre une étape consistant à :

remettre le filtrage des variations à l'état initial après avoir reconnu l'abandon de la voie par le véhicule précédent, en particulier du fait que le filtrage ne prenne plus en considération les distances du véhicule précédent mesurées avant la reconnaissance de l'abandon de la trajectoire.

**12.** Procédé conforme à l'une des revendications 8 à 11,
selon lequel la première estimation est également basée sur la différence de vitesse par rapport au véhicule précédent.

**13.** Procédé conforme à l'une des revendications 8 à 12, permettant en outre de prévoir une manoeuvre de déplacement d'un véhicule comprenant des étapes consistant à :

détecter l'accélération du véhicule pour une première distance de ce véhicule d'un point de référence le long d'une voie,
au second instant le long d'une voie, le véhicule se trouvant à la seconde distance,
obtenir au moins une seconde estimation de l'accélération du véhicule à un second instant,
la seconde estimation étant respectivement basée sur la vitesse du véhicule pour la première distance, la première distance du point de référence et le second instant,
la seconde estimation étant basée sur la supposition d'une seconde manoeuvre de déplacement,
pour chaque estimation, déterminer un chiffre d'indice concernant la probabilité d'arrivée de cette estimation en prenant en considération l'accélération détectée du véhicule pour la seconde distance du point de référence,
prévoir la manoeuvre de déplacement sur le fondement du chiffe d'indice déterminé.

**14.** Procédé conforme à la revendication 13,
selon lequel les premières variations prévues de la vitesse souhaitée pour la première manoeuvre de déplacement ont été déterminées sur le fondement de la géométrie d'une première voie pour la première manoeuvre de déplacement.

Fig. 1a

**Fig. 1b**

**Fig. 1c**

Fig. 2a

Fig. 2b

Fig. 2c

Fig. 2d

Erfassen der Entfernung $s(t_1)$ und der
Geschwindigkeit $v(t_1)$

↓

Erstellen der drei Schätzungen a, b und c zur
Geschwindigkeit und Entfernung im Zeitpunkt $t_2$

↓

Bestimmen der Eintrittswahrscheinlichkeiten
für jede Schätzung

↓

Ausgeben einer Vorhersage zum Fahrmanöver

**Fig. 3**

**Fig. 4**

Erfassen der Entfernung $s(t_1)$ und der Geschwindigkeit $v(t_1)$

Erstellen der drei Schätzungen a, b und c zur Beschleunigung im Zeitpunkt $t_2$

Bestimmen der Eintrittswahrscheinlichkeiten für jede Schätzung

Ausgeben einer Vorhersage zum Fahrmanöver

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014111408 A1

**In der Beschreibung aufgeführte Nicht-Patentliteratur**

- Driver Intent Inference at Urban Intersections using the Intelligent Driver Model. *IEEE Intelligent Vehicle Symposium,* Juni 2012, 1162-1167

- **P.G. GIPPS.** A behavioural car-following model for computer simulation. *Transp. Res. B,* April 1981, vol. 15, 105-111